# FASCICULE DE BREVET EUROPEEN

(11) **EP 3 590 223 B1**
(45) Date de publication et mention de la délivrance du brevet: **13.01.2021**
(21) Numéro de dépôt: 18704578.6
(22) Date de dépôt: 19.02.2018
(51) Int. Cl.: H04L 9/08, H04L 9/32, H04L 9/00

(54) **PROCÉDÉ ET DISPOSITIF POUR MÉMORISER ET PARTAGER DES DONNÉES INTÉGRÉS**
INTEGRIERTES VERFAHREN UND VORRICHTUNG ZUM SPEICHERN UND TEILEN VON DATEN
INTEGRATED METHOD AND DEVICE FOR STORING AND SHARING DATA

(30) Priorité: 28.02.2017 FR 1700195; 30.10.2017 FR 1771144
(43) Date de publication de la demande: 08.01.2020
(73) Titulaire: Airbus Helicopters, 13725 Marignane Cedex (FR)
(72) Inventeur: CHOPART, Stéphane, 13170 Les Pennes Mirabeau (FR)
(74) Mandataire: GPI & Associés
(86) Numéro de dépôt international: PCT/EP2018/054046
(87) Numéro de publication internationale: WO 2018/158102

(56) Documents cités:
- US-A1- 2016 330 027
- CONNER FROMKNECHT ET AL: "A Decentralized Public Key Infrastructure with Identity Retention", INTERNATIONAL ASSOCIATION FOR CRYPTOLOGIC RESEARCH,, vol. 20141111:124302, 11 novembre 2014 (2014-11-11), pages 1-16, XP061017286,
- Ladislav Mecir: "Blockchain - Wikipedia", , 16 novembre 2016 (2016-11-16), XP055394566, Extrait de l'Internet: URL:https://en.wikipedia.org/w/index.php?t itle=Blockchain&oldid=749853094 [extrait le 2017-07-28]

## Description

La présente invention concerne un procédé et un dispositif pour mémoriser et partager des données intègres, notamment dans le domaine aéronautique et spatial.

Dans le domaine aéronautique et spatial, toutes sortes de données sont échangées entre diverses personnes physiques ou morales. En particulier, des données peuvent être échangées entre un aéronef et un système présent en dehors de l'aéronef.

Ces données peuvent prendre diverses formes. Par exemple, ces données peuvent prendre la forme d'un logiciel ou de données de configuration à télécharger sur un système embarqué dans un aéronef, de logiciels et de données de vol qui concourent aux opérations aériennes et aux activités de maintenance des aéronefs, de logiciels et de données reçues à bord d'un aéronef pour la gestion de flottes d'aéronefs, de documents numérisés administratifs et/ou techniques et/ou opérationnels. Ces données peuvent représenter toute autre information numérique qui peut avoir un impact en termes de sécurité des vols, d'opérations aériennes ou industrielles, de propriété intellectuelle, d'image...

Les données échangées peuvent être tracées pour identifier leurs sources et leurs destinataires. Ces données doivent éventuellement être disponibles pour plusieurs acteurs différents, par exemple divers aéronefs, diverses compagnies aériennes, diverses agences gouvernementales... De plus, ces données doivent être intègres et authentiques pour ne pas engendrer un incident. En outre, les données à échanger peuvent être confidentielles.

Ces quatre conditions s'avèrent difficiles à obtenir. En effet, des attaques informatiques peuvent avoir pour but de modifier les données, et peuvent avoir un impact sur la fiabilité et/ou la traçabilité des données échangées.

Par ailleurs et sur un aéronef en vol, les données sont sujettes à un risque de perte en cas de panne ou d'accident. Lorsque les données sont stockées sur un support de stockage de l'aéronef avant d'être transférées au sol à d'autres acteurs, une destruction involontaire du support de stockage peut entraîner la perte des données mémorisées.

Certaines solutions techniques consistent à authentifier les personnes, les services ou les équipements qui interagissent avec les systèmes sensibles, pour savoir s'ils sont autorisés à agir ou bien s'il s'agit d'éléments non autorisés, possibles vecteurs d'attaques. Des solutions techniques sont ainsi basées sur l'utilisation de certificats numériques conformes à la spécification PKIX qui met en œuvre des mécanismes cryptographiques asymétriques.

Ces solutions font appel à un tiers de confiance qui est reconnu par les différents acteurs du réseau. Un tel tiers de confiance est parfois appelé « Autorité de Certification », en référence à la notion de « certificat numérique » utilisée par le standard technique applicable en la matière connu sous l'acronyme « PKIX ».

Selon une solution de ce type, une autorité de certification délivre à chaque utilisateur trois couples de clés, incluant chacun une clé publique et une clé privée, et les certificats associés. Ces trois couples de clés sont utilisés respectivement pour répondre à des besoins d'authentification, de signature et de chiffrement. Un certificat atteste qu'un couple de clés appartient à un utilisateur particulier. Un certificat peut par exemple contenir un numéro de série, le type de signature utilisé, l'identification du tiers de confiance, des dates d'émission et de validité, l'identification du propriétaire des clés... Par exemple, un certificat peut être établi selon la norme X509.

Ainsi, un utilisateur peut signer des données en utilisant un premier couple de clés pour garantir l'authenticité de donnés et en protéger l'intégrité. Les données ou une empreinte numérique de ces données sont signées avec la clé privée du premier couple de clés, pour permettre la vérification de cette signature par des tiers à l'aide du certificat et de la clé publique du premier couple de clés.

Un utilisateur peut chiffrer des données en utilisant un deuxième couple de clés pour assurer leur confidentialité. Un utilisateur peut dériver de la clé privée du deuxième couple de clés une clé symétrique. Les données sont alors chiffrées à l'aide de cette clé symétrique. Cette clé symétrique est elle-même chiffrée avec la clé publique du destinataire. Les données chiffrées et la clé symétrique chiffrée sont envoyées au destinataire. Le destinataire peut alors déchiffrer la clé symétrique à l'aide de sa clé privée, puis déchiffre les données à l'aide de la clé symétrique.

Le troisième couple de clés peut être utilisé à des fins d'authentification.

Par exemple, une solution de ce type est connue sous l'acronyme « PKI » correspondant à l'expression anglaise « public key infrastructure ».

Les documents FR 2912578, FR 2922702 illustrent de telles solutions.

Bien que séduisantes, ces solutions techniques peuvent s'avérer délicates à mettre en œuvre.

Une solution de type PKI implique l'utilisation d'une autorité de certification pour gérer les diverses clés et les certificats. Pour garantir une bonne gestion des clés, des processus lourds et complexes sont mis en œuvre. Par exemple, un couple de clés a une durée de vie limitée. L'obtention d'un couple de clés de remplacement à l'issue de cette durée de vie implique nécessairement de solliciter l'autorité de certification. Cette autorité de certification est donc toujours sollicitée.

De plus, la confiance accordée par des utilisateurs à une solution de ce type est de fait liée à la confiance accordée à l'autorité de certification. Une difficulté réside donc dans la difficulté à trouver un tiers de confiance qui satisfasse tous les acteurs en particulier dans un contexte international / intercontinental.

En outre, l'utilisation d'une autorité de certification centralisée peut poser un problème de sécurité. Si cette autorité de certification centralisée est victime d'une attaque, la sécurité de l'ensemble du réseau est mise à mal.

Par ailleurs, l'autorité de certification peut comprendre une entité de séquestre. L'entité de séquestre a pour fonction de mettre sous séquestre les clés utilisées pour le chiffrement de données, afin de les restaurer si besoin. De multiples raisons sont à l'origine d'une telle entité. En effet, la perte d'une clef privée de chiffrement par son détenteur ne doit pas être définitive. En outre, une organisation peut souhaiter être en mesure de déchiffrer des documents lorsqu'un de ces membres n'en fait plus partie. Enfin, dans certains pays, la loi exige que les données chiffrées puissent être déchiffrées à la demande des autorités nationales.

Dans un contexte international, cette dernière exigence peut poser des difficultés puisque chaque pays tend à souhaiter le séquestre sur son propre sol des clés chiffrant les messages de ses ressortissants.

Par ailleurs, si un utilisateur fait une erreur de manipulation ou de configuration de logiciel lors de la vérification des signatures électroniques, la chaine de confiance permettant de remonter à l'autorité de certification racine peut dans certains cas être compromise.

Les solutions techniques consistant à rendre disponibles des données recueillies, par exemple à partir d'aéronefs, sont plus classiques. Ces solutions peuvent consister à mémoriser ces données en plusieurs endroits physiquement distincts. L'accès aux données est garanti même en cas de destruction d'un lieu de stockage. Par exemple, chaque acteur peut avoir sa propre copie.

Toutefois, la synchronisation de toutes les données peut être délicate. S'assurer que les bases de données des différents acteurs sont à jour peut être difficile et onéreux.

Le document FR3018379 n'appartient pas au domaine de l'invention, et n'apporte aucune solution au problème posé. Ce document est cité à titre informatif uniquement. De même, le document US 2016/0283920 est connu.

La solution technique connue sous la dénomination Certcoin est aussi connue. Le système connu sous la dénomination namecoin vise à gérer des noms de domaines.

C. Fromknecht et al: "A Decentralized Public Key Infrastructure with Identity Rétention", expose un procédé faisant usage d'une chaîne de blocs pour le partage sécurisé de données entre deux utilisateurs.

Les sites internet suivants sont aussi connus :
- https://conference.hitb.org/hitbsecconf2013ams/materials/ HugoTeso Aircraft Hacking Practical Aero Series.pdf
- https://publications.airlines.org/ Spec42 Aviation Industry Standards for Digital Information Security
- https://datatracker.ietf.org/wg/pkix-charter.html
- https://letsencrypt.org//2016/08/20/what-it-costs-to-run-lets-encrypt.html.
- http://www.zdnet.fr/actualites/piratee-1-autorite-de-certification-diginotar-est-en-faillite-39764136.htm
- https://threatpost.com/polish-planes-grounded-after-airline-hit-with-ddos-attack/113412/
- https://bdtechtalks.com/2017/01/11/how-blockchain-can-improve-cybersecurity/
- https://courses.csail.mit.edu/6.857/2014/files/19-fromknecht-velicann-yakoubov-certcoin.pdf
- https://bitcoin.org/bitcoin.pdf
- https://defensecontractormarketing.com/top-100-aerospace-companies-2015/
- http://sancy.univ-bpclermont.fr/∼lafourcade/PAPERS/PDF/KLL14.pdf
- http://emercoin.com/

La présente invention a alors pour objet de proposer un procédé de génération et de gestion de double clés et d'échanges de données notamment adapté à l'environnement aéronautique et spatial.

L'invention vise un procédé pour mémoriser et partager des données intègres entre des acteurs d'un réseau, le procédé comprenant une étape de cryptographie des données par une méthode cryptographique asymétrique à double clés, chaque acteur possédant au moins une dite double clés.

Une chaîne de blocs étant mise en œuvre, un bloc comprenant une empreinte numérique du bloc qui le précède dans la chaîne de blocs et au moins une transaction qui comprend des données à partager, au moins un bloc étant un bloc d'initialisation initialisant la chaîne de blocs et au moins un bloc étant un bloc d'inscription d'un nouvel acteur, au moins un dit acteur étant un acteur majeur, au moins un dit acteur étant un acteur subordonné et au moins un dit acteur étant un équipement informatique, un dit acteur majeur étant autorisé à requérir une adhésion audit réseau d'un nouvel acteur majeur ainsi que d'un nouvel acteur subordonné et d'un nouvel équipement informatique, un dit acteur subordonné étant autorisé à requérir une adhésion audit réseau uniquement d'un nouvel équipement informatique, le procédé comporte :
- une étape d'initialisation de la chaîne de blocs qui comporte une opération de mémorisation dudit au moins un bloc d'initialisation dans la chaîne de blocs par une autorité prédéterminée à l'aide d'au moins un ordinateur, ledit au moins un bloc d'initialisation comprenant au moins une dite transaction qui inclut un enregistrement d'identité d'un acteur majeur,
- une étape d'acceptation d'un nouvel acteur qui inclut une opération de mémorisation d'au moins un bloc d'inscription d'un nouvel acteur dans la chaîne de blocs par un dit acteur majeur ou subordonné à l'aide d'au moins un ordinateur, ledit au moins un bloc d'inscription d'un nouvel acteur comprenant au moins une dite transaction qui inclut un enregistrement d'identité dudit nouvel acteur,

Un dit enregistrement d'identité d'un acteur majeur/subordonné ou équipement informatique comprenant des données d'identification de cet acteur majeur/ acteur subordonné ou équipement informatique qui inclut au moins un identifiant de cet acteur majeur/ acteur subordonné ou équipement informatique, une clé publique d'une double clés dite double clés de signature de cet acteur majeur/ acteur subordonné ou équipement informatique destinée à la signature de données, une clé publique d'une double clés dite double clés de chiffrement de cet acteur majeur/ acteur subordonné ou équipement informatique destinée à la signature de données, une clé publique d'une double clés dite double clés de révocation de cet acteur majeur/ acteur subordonné ou équipement informatique destinée à la révocation au moins de la double clés de chiffrement et de la double clés de signature de cet acteur majeur/ acteur subordonné ou équipement informatique, ladite autorité n'intervenant plus à l'issue de l'étape d'initialisation ou n'intervenant que lors d'une étape de réinitialisation d'un acteur suite à une révocation de la double clés de révocation de cet acteur.

L'expression « chaque acteur étant associé à une double clés comprenant une clé privée et une clé publique » signifie que chaque acteur possède une clé privée connue de lui seul, et une clé publique qui correspond à la clé privée.

L'expression « bloc comprenant une empreinte numérique du bloc qui le précède » signifie qu'à l'exception du premier bloc de la chaîne de blocs, chaque bloc comporte l'empreinte numérique du bloc qui le précède dans la chaîne de blocs.

L'expression « acteur majeur » désigne une personne physique ou morale munie d'au moins un ordinateur connecté au réseau pour appliquer le procédé de l'invention. De même l'expression « acteur subordonné » désigne une personne physique ou morale munie d'au moins un ordinateur connecté au réseau pour appliquer le procédé de l'invention. L'expression « équipement informatique » désigne un équipement relié au réseau, tel que par exemple un calculateur d'un aéronef.

Pour mémoire, une chaîne de blocs est connue sous l'expression anglaise « BlockChain ». Une chaîne de blocs est notamment utilisée dans le domaine financier et en particulier dans le système d'échange de monnaie « bitcoins ». Des détails sur la technologie BlockChain peuvent être trouvés sur le réseau internet, par exemple aux adresses suivantes https://blockchainfrance.net/, https://fr.wikipedia.org/wiki/Cha%C3%AEne_de_blocs, https://fr.wikipedia.org/wiki/Bitcoin#La_cha.C3.AEne_de_blocs

Une chaîne de blocs est une base de données distribuée qui gère une liste de données protégées contre la falsification ou la modification. Les transactions représentent les échanges entre les utilisateurs du réseau, et sont stockées au sein des blocs de la chaîne de blocs. Les différentes transactions enregistrées sont regroupées dans des blocs. Après avoir enregistré les transactions récentes, un nouveau bloc est miné par un acteur qualifié de mineur », à savoir généré, et analysé. Si le bloc est valide, le bloc peut être horodaté et ajouté à la chaîne de blocs. Les transactions sont alors visibles dans l'ensemble du réseau. Une fois ajouté à la chaîne de blocs, un bloc ne peut plus être ni modifié ni supprimé, ce qui garantit l'authenticité et la sécurité du réseau.

La présente invention utilise la technologie de la chaîne de blocs non pas pour échanger des monnaies mais pour au moins mémoriser les clés publiques des double clés des acteurs d'un réseau informatique. Ce réseau peut être un réseau privé et peut réunir des acteurs du domaine aéronautique et spatial, chaque acteur représentant un nœud du réseau informatique et comprenant au moins un ordinateur connecté au réseau informatique. La chaîne de blocs est alors mémorisée sur au moins un ordinateur de certains acteurs voire de tous les acteurs.

La chaîne de blocs peut être qualifiée de chaîne de blocs « aéro » lors d'une utilisation au sein d'un réseau d'acteurs du domaine aéronautique et spatial.

Cette chaîne de blocs peut être construite de manière usuelle. Le protocole de construction des blocs peut être un protocole connu de l'homme du métier mettant en œuvre un ordinateur. Ce protocole peut être associé à une méthode par consensus. Un nouveau bloc est inséré dans la chaîne de blocs uniquement si un nombre référant d'acteurs ont validé le bloc, via par exemple les processus connus sous l'expression « preuve d'enjeu » ou sous l'expression « preuve de travail ».

La fréquence de création des blocs de la chaîne de blocs peut être définie en fonction du nombre d'acteurs sur une base temporelle, ou en fonction d'un nombre de transactions minimum devant être contenues dans un bloc.

Si la chaîne de blocs contient un nombre de blocs trop important pour autoriser une copie complète de la chaîne de blocs sur un ordinateur portable par exemple, le procédé peut s'appuyer sur la technologie des accumulateurs cryptographiques.

Selon l'invention, la chaîne de blocs comporte au moins un bloc d'initialisation créé et mémorisé par une autorité prédéterminée. Cette autorité prédéterminée n'intervient qu'à ce stade du procédé contrairement à un système PKI usuel, ou n'intervient qu'à ce stade du procédé et pour réinitialiser un acteur durant une étape de réinitialisation suite à une compromission d'uns double clés de révocation de cet acteur.

Selon un aspect, en cas de compromission de la clé privée de révocation d'un acteur, un cycle complet de nouvel enregistrement de cet acteur peut être entrepris soit uniquement par des acteurs majeurs, soit uniquement par une autorité prédéterminée et par exemple l'autorité sollicitée durant l'étape d'initialisation, soit par des acteurs majeurs et/ou une autorité prédéterminée.

L'initialisation de la chaîne de blocs est réalisée par une autorité qui mine les premiers blocs de la chaîne de blocs. Ces premiers blocs sont des blocs dénommés « bloc d'initialisation » par commodité et contiennent les enregistrements d'identité d'acteurs majeurs du réseau. Ces acteurs majeurs sont des acteurs ayant le pouvoir d'enregistrer tous types d'acteurs.

Cette autorité peut être un organisme connu, par exemple un des organismes connus sous les acronymes OACI, FAA ou EASA. Eventuellement, cette autorité peut aussi prendre la forme d'un consortium de compagnies internationales parfaitement identifiées comme acteurs majeurs pour éviter de centraliser le pouvoir d'initialisation de la chaîne de blocs.

Suite à cette initialisation, les acteurs majeurs peuvent mémoriser des blocs d'acceptation d'un nouvel acteur pour introduire un nouvel acteur, ce nouvel acteur pouvant être un acteur majeur, un acteur subordonné ou un équipement informatique. Les acteurs subordonnés enregistrés peuvent quant à eux mémoriser des blocs d'acceptation d'un nouvel acteur uniquement pour introduire dans le réseau un équipement informatique. Les acteurs de type « équipement informatique » ne peuvent pas enregistrer de nouveaux acteurs.

L'enregistrement d'un équipement informatique est ainsi toujours fait sous la responsabilité d'une personne physique ou morale qui est elle-même déjà enregistrée et qui est garante des actions liées à cet équipement informatique.

Chaque enregistrement d'identité relatif à un acteur est visible par tous les acteurs du réseau et comporte au moins trois clés publiques de trois doubles clés respectivement de signature, de chiffrement et de révocation. Les clés privées des double clés respectivement de signature, de chiffrement et de révocation d'un acteur sont en possession de cet acteur.

De plus, un enregistrement d'identité comporte au moins une information identifiant l'acteur concerné. De telles informations peuvent comprendre une adresse de l'acteur, le nom de l'acteur que cet acteur soit une personne morale ou physique voire un équipement informatique, un numéro d'immatriculation de l'acteur...

Dès lors, les acteurs du réseau peuvent se référer directement à la chaîne de blocs mémorisée sur leurs ordinateurs pour obtenir les clés publiques des différents acteurs ainsi que les informations les identifiant.

De plus, la gestion des clés est effectuée par les acteurs eux-mêmes en sollicitant la chaîne de blocs à l'issue de l'étape d'initialisation.

Par suite, la notion de tiers de confiance peut disparaitre totalement à l'issue de l'étape d'initialisation.

De plus, les acteurs du réseau peuvent alors s'identifier en consultant la chaîne de blocs avec un niveau d'assurance important, les mécanismes de création et de gestion des clés étant mis en œuvre de façon décentralisée, résiliente et transparente

Tous les acteurs du réseau peuvent en outre vérifier eux-mêmes avec un ordinateur la fiabilité et l'authenticité des transactions électroniques émises dans la chaîne de blocs en utilisant les clés publiques disponibles en ligne dans la chaîne de blocs.

En outre, les transactions mémorisées dans la chaîne de blocs peuvent comprendre des données diverses échangées entre les acteurs, et notamment des données aéronautiques telles que décrites précédemment. Ces données peuvent être signées ou chiffrées en fonction du besoin à l'aide respectivement des double clés de signature et de chiffrement.

La double clés de révocation permet à un acteur de révoquer et de renouveler si nécessaire la double clés de signature et la double clés de chiffrement de cet acteur, notamment lorsque ces double clés sont compromises ou expirées selon une politique de gestion des identités numériques de la chaîne de blocs.

Ce procédé peut de plus comporter une ou plusieurs des caractéristiques qui suivent.

Un dit enregistrement d'identité d'un acteur majeur/ acteur subordonné ou équipement informatique peut comporter une identification d'un algorithme cryptographique de signature associé à ladite double clés de signature de cet acteur majeur/ acteur subordonné ou équipement informatique, une identification d'un algorithme cryptographique de chiffrement associé à ladite double clés de chiffrement de cet acteur majeur/ acteur subordonné ou équipement informatique, une identification d'un algorithme cryptographique de révocation associé à ladite double clés de révocation de cet acteur majeur/ acteur subordonné ou équipement informatique.

Ainsi, chaque acteur du réseau peut déterminer aisément l'algorithme cryptographique à utiliser s en consultant la chaîne de blocs avec un ordinateur.

Selon un aspect, un dit enregistrement d'identité d'un acteur majeur/ acteur subordonné ou équipement informatique peut comporter une date de validité de ladite double clés de signature de cet acteur majeur/ acteur subordonné ou équipement informatique, et une date de validité de ladite double clés de chiffrement de cet acteur majeur/ acteur subordonné ou équipement informatique.

Chaque date de validité peut comprendre une date d'expiration voire une date de mise en service de la double clés associée. Ces données sont accessibles à tous les acteurs en consultant la chaîne de blocs avec un ordinateur.

Selon un aspect, un dit enregistrement d'identité d'un acteur majeur/ acteur subordonné ou équipement informatique peut comporter un niveau d'importance de cet acteur majeur/ acteur subordonné ou équipement informatique utilisé lors d'une opération de validation d'un bloc par preuve d'enjeu créé par cet acteur majeur/ acteur subordonné ou équipement informatique.

Lorsqu'une transaction est émise par un acteur dans le réseau, chaque acteur peut prendre la forme d'un mineur pour miner un bloc. Ce bloc est alors analysé informatiquement par au moins un autre acteur afin d'être validé ou invalidé. Si le bloc est invalidé, la transaction n'est pas enregistrée. Par contre, si le bloc est validé ce bloc est mémorisé en dernière position dans la chaîne de blocs.

La validation peut être effectuée via une méthode de consensus, par exemple par preuve d'enjeu. Le système dit de validation des blocs par preuve d'enjeu favorise les acteurs qui ont le plus d'intérêts dans le système au travers du niveau d'importance. Ce niveau d'importance peut être mesuré en fonction de résultats annuels par société par exemple.

A titre illustratif, deux niveaux d'importance peuvent être définis, à savoir un niveau d'importance haut et un niveau d'importance bas. Un bloc miné par un acteur ayant un niveau d'importance haut peut être introduit dans la chaîne de blocs après validation d'un autre acteur. Par contre, un bloc miné par un acteur ayant un niveau d'importance bas peut être introduit dans la chaîne de blocs après validation d'un acteur ayant un niveau d'importance haut ou après validation par au moins deux acteurs ayant un niveau d'importance bas.

De manière alternative, une méthode de validation d'un bloc de type « preuve de travail » peut être mise en place. Les acteurs mineurs peuvent par exemple être rémunérés par le biais d'abonnements payants des acteurs par exemple.

De manière alternative, une méthode de validation de blocs de type hybride « preuve de travail » - « preuve d'enjeu » est envisageable. Par exemple, les critères appliqués à la méthode de preuve de travail varient en fonction du niveau d'importance du mineur.

Selon un aspect, au moins un dit identifiant d'un acteur majeur/ acteur subordonné ou équipement informatique peut inclure un nom de cet acteur majeur/ acteur subordonné ou équipement informatique ou une adresse de cet acteur majeur/ acteur subordonné ou équipement informatique.

L'adresse peut prendre la forme d'une adresse physique, ou encore d'une adresse d'une boîte aux lettres électronique par exemple.

Un rôle de cet acteur majeur/ acteur subordonné ou équipement informatique dans le réseau peut aussi être défini, tel que par exemple un rôle de fabricant d'aéronef, un rôle de technicien de maintenance, un rôle de commerçant, un rôle opérationnel....

Selon un aspect, les données d'identification d'un acteur peuvent inclure un niveau d'assurance de cet acteur permettant d'indiquer de quelle manière cet acteur a été identifié.

Par exemple, l'enregistrement de nouveaux acteurs majeurs présentant le plus haut niveau d'assurance se fait sur présentation de papiers d'identité. Pour l'enregistrement d'un acteur subordonné présentant un niveau d'assurance moindre, une adresse d'une boîte aux lettres électronique correspondant à un nom de domaine vérifié par une autre chaîne de blocs peut être suffisante. Par exemple une chaîne de type NameCoin décrite par exemple sur le site https://namecoin.org/ peut être utilisée.

Ainsi, l'acteur qui transmet une transaction pour enregistrer un nouvel acteur indique le niveau d'assurance de ce nouvel acteur.

Selon un aspect, un dit enregistrement d'identité d'un acteur majeur/ acteur subordonné ou équipement informatique comporte une clé publique d'une double clés dite « double clés d'authentification » de cet acteur majeur/ acteur subordonné ou équipement informatique destinée à l'authentification de cet acteur majeur/ acteur subordonné ou équipement informatique.

Un enregistrement d'identité peut ainsi comprendre plusieurs des attributs suivants pour un acteur : identité de l'acteur (personne physique ou morale ; équipement informatique); adresse, rôle, clé publique « en ligne » d'une double clés de signature, clé publique « en ligne » d'une double clés de chiffrement, clé publique « en ligne » d'une double clés d'authentification, clé publique « hors ligne » d'une double clés de révocation, algorithmes cryptographiques associés, niveau d'assurance de l'enregistrement, niveau d'importance dans le processus de validation des blocs, dates de validité des double clés. Cette collection d'attributs peut être complétée ou modifiée selon les standards en vigueur.

Selon un aspect, si pour un dit acteur majeur/ acteur subordonné ou équipement informatique au moins deux blocs de ladite chaîne de blocs contiennent des informations distinctes relatives à une même donnée d'identification de cet acteur majeur/ acteur subordonné ou équipement informatique, lesdits au moins deux blocs ayant été insérés dans ladite chaîne de blocs à des instants différents, ladite donnée d'identification de cet acteur majeur/ acteur subordonné ou équipement informatique qui est en vigueur à un instant courant présente les informations contenues dans ledit au moins deux blocs le plus récent.

Les données d'identification d'un acteur peuvent évoluer. Dès lors, pour obtenir les données d'identification valides à un instant donné, il suffit d'accéder à la chaîne de blocs avec un ordinateur. Les données d'identification les plus récentes sont de fait les données d'identification en vigueur.

Par exemple, deux blocs différents contiennent la clé publique de signature d'un acteur. La clé publique de signature d'un acteur en vigueur à un instant courant est la clé publique de signature contenue dans le bloc le plus récent.

En outre, un acteur peut toujours avoir accès aux anciennes données d'identification d'un acteur si besoin, par exemple pour décrypter les données contenues dans une transaction antérieure à l'émission des nouvelles données d'identification.

Selon un aspect, l'opération de mémorisation d'au moins un bloc d'inscription d'un nouvel acteur peut comporter les opérations suivantes :
- émission dans ledit réseau d'une requête incluant un dit enregistrement d'identité dudit nouvel acteur, en exécutant avec un ordinateur d'un acteur enregistré des instructions mémorisées dans une mémoire par exemple,
- minage par un dit acteur de la chaîne de blocs d'un dit bloc d'identification d'un nouvel acteur incluant ledit enregistrement d'identité dudit nouvel acteur, en exécutant avec un ordinateur du mineur des instructions mémorisées dans une mémoire par exemple,
- validation dudit bloc par au moins un acteur de la chaîne de blocs distinct de l'acteur ayant réalisé ledit minage, en exécutant avec un ordinateur des instructions mémorisées dans une mémoire par exemple,
- et mémorisation après ladite validation dudit bloc dans la chaîne de blocs, en exécutant avec un ordinateur des instructions mémorisées dans une mémoire par exemple.

De manière générale, chaque transaction distincte d'un enregistrement d'identité réalisée lors de l'étape d'initialisation peut suivre ce processus. Une transaction est émise sur le réseau par un acteur à l'aide d'un ordinateur appliquant des instructions mémorisées. Un acteur jouant un rôle de mineur reçoit la transaction et crée un bloc incluant la transaction avec un ordinateur en appliquant un algorithme de minage prédéterminé. Au moins un autre acteur valide le bloc à l'aide d'un ordinateur en vérifiant des points prédéterminés, éventuellement de manière automatique à l'aide d'instructions mémorisées, puis le mineur mémorise le bloc dans la chaîne de blocs de son ordinateur lorsque les validations requises sont acquises. La chaîne de blocs est alors dupliquée par exemple sur chacun des ordinateurs des acteurs du réseau, éventuellement de manière automatique chaque ordinateur consultant le réseau pour mettre à jour la chaîne de blocs.

En particulier, une transaction relative à un enregistrement d'identité est vérifiée en : vérifiant l'identité du nouvel acteur selon la politique d'enregistrement, vérifiant les algorithmes cryptographiques utilisés, vérifiant la détention par le nouvel acteur des clés privées associées aux clés publiques de l'enregistrement.

Selon un aspect, le procédé peut comporter une étape de modification de clés durant laquelle un dit acteur modifie au moins une dite double clés lui appartenant incluant une clé publique en vigueur et une clé privée en vigueur, ladite étape de modification comprenant les opérations suivantes :
- génération d'un nouvelle double clés incluant une nouvelle clé publique et une nouvelle clé privée, en exécutant avec un ordinateur de l'acteur concerné des instructions mémorisées dans une mémoire par exemple,
- création et émission vers le réseau ,en exécutant avec un ordinateur de l'acteur concerné des instructions mémorisées dans une mémoire par exemple, d'une transaction dite « transaction d'identification » comprenant un identifiant dudit acteur et la clé publique en vigueur ainsi que la nouvelle clé publique et un algorithme cryptographique associé à cette nouvelle clé publique, ladite transaction d'identification comprenant ladite nouvelle clé publique et ledit identifiant signés numériquement avec la clé privée en vigueur ainsi que ledit identifiant signé numériquement avec la nouvelle clé privée,
- insertion de ladite transaction d'identification dans un nouveau bloc de la chaîne de blocs, en exécutant avec au moins un ordinateur d'un autre acteur des instructions mémorisées dans une mémoire par exemple.

Ainsi, un acteur peut modifier sa double clés de signature, sa double clés de chiffrement ou le cas échéant sa double clés d'authentification en appliquant ce procédé. Un acteur n'a pas besoin de faire appel à une autorité tierce pour réaliser cette modification.

Pour insérer une transaction d'identification dans un nouveau bloc, la validation de la transaction d'identification peut être requise.

Selon un aspect, ladite opération d'insertion de ladite transaction d'identification dans un nouveau bloc de la chaîne de blocs peut alors comporter :
- une phase de vérification de ladite transaction d'identification par au moins un acteur dudit réseau qui inclut :
   ∘ une vérification que ladite clé publique en vigueur appartient à l'acteur possédant ledit identifiant en consultant la chaîne de blocs avec un ordinateur, en exécutant avec un ordinateur d'un acteur mineur des instructions mémorisées dans une mémoire par exemple,
   ∘ **un premier** décryptage avec un ordinateur et la clé publique en vigueur de ladite nouvelle clé publique et dudit identifiant signés numériquement par la clé privée en vigueur, en exécutant avec un ordinateur d'un acteur mineur des instructions mémorisées dans une mémoire par exemple,
   ∘ une détermination d'une première équivalence entre ladite nouvelle clé publique et ledit identifiant obtenu par ledit premier décryptage et respectivement la clé publique en vigueur et l'identifiant mémorisés dans la transaction d'identification, en exécutant avec un ordinateur d'un acteur mineur des instructions mémorisées dans une mémoire par exemple,
   ∘ un deuxième décryptage avec un ordinateur et la nouvelle clé publique dudit identifiant signé numériquement par la nouvelle clé privée, en exécutant avec un ordinateur d'un acteur mineur des instructions mémorisées dans une mémoire par exemple,
   ∘ une détermination d'une deuxième équivalence entre ledit identifiant obtenu par ledit deuxième décryptage et l'identifiant mémorisé dans la transaction d'identification, en exécutant avec un ordinateur d'un acteur mineur des instructions mémorisées dans une mémoire par exemple,
   ∘ une validation de ladite transaction d'identification en présence de la première équivalence et de la deuxième équivalence, en exécutant avec un ordinateur d'un acteur mineur des instructions mémorisées dans une mémoire par exemple,
- une phase de création d'un nouveau bloc incluant ladite transaction d'identification en cas de validation, en exécutant avec un ordinateur d'un acteur mineur des instructions mémorisées dans une mémoire par exemple.

La transaction d'identité émise est ainsi vérifiée lors de la phase de vérification par un acteur dit « acteur mineur » différent de l'acteur ayant émis la transaction d'identité. En particulier, cet acteur mineur vérifie a minima : la correspondance identité - clé publique en vigueur par interrogation avec un ordinateur du dernier bloc de la chaîne bloc contenant la clé publique concernée, la signature faite avec la clé publique en vigueur, la signature faite avec la nouvelle clé publique.

Une fois ces vérifications faites, un nouveau bloc contenant la transaction d'identification pourra être miné par l'acteur mineur. Lorsqu'au moins un acteur aura validé le nouveau bloc miné par une méthode de consensus, le nouveau bloc est mémorisé dans la chaîne de blocs de l'acteur mineur. La chaîne de blocs est de plus dupliquée sur chacun des ordinateurs des acteurs du réseau.

Selon un aspect, le procédé peut comporter une étape de révocation durant laquelle un dit acteur révoque au moins une dite double clés lui appartenant incluant une clé publique en vigueur et une clé privée en vigueur, ladite étape de révocation comprenant les opérations suivantes :
- génération d'un nouvelle double clés incluant une nouvelle clé publique et une nouvelle clé privée, en exécutant avec un ordinateur de l'acteur concerné des instructions mémorisées dans une mémoire par exemple,
- création et émission, en exécutant avec un ordinateur de l'acteur concerné des instructions mémorisées dans une mémoire par exemple, vers le réseau d'une transaction de révocation comprenant un identifiant dudit acteur et la clé publique de révocation de cet acteur et la clé publique en vigueur à révoquer ainsi que la nouvelle clé publique et un algorithme cryptographique associé à cette nouvelle clé publique, ladite transaction de révocation comprenant ladite nouvelle clé publique et ledit identifiant signés numériquement avec la clé privée de révocation ainsi que ledit identifiant signé numériquement avec la nouvelle clé privée,
- insertion de ladite transaction de révocation dans un nouveau bloc de la chaîne de blocs, en exécutant avec au moins un ordinateur d'un acteur mineur des instructions mémorisées dans une mémoire par exemple.

Ainsi, un acteur peut révoquer sa double clés de signature, sa double clés de chiffrement ou le cas échéant sa double clés d'authentification en appliquant ce procédé. Un acteur n'a pas besoin de faire appel à une autorité tierce pour réaliser cette modification.

Pour être inséré dans un nouveau bloc, la validation de la transaction de révocation peut être requise.

Selon un aspect, ladite opération d'insertion de ladite transaction de révocation dans un nouveau bloc de la chaîne de blocs peut comporter :
- une phase de vérification de ladite transaction de révocation par au moins un acteur dudit réseau qui inclut :
   ∘ une vérification que ladite clé publique de révocation appartient à l'acteur possédant ledit identifiant en consultant la chaîne de blocs avec un ordinateur, en **exécutant** avec un ordinateur d'un acteur mineur des instructions mémorisées dans une mémoire par exemple,
   ∘ un premier décryptage avec un ordinateur et la clé publique de révocation de ladite nouvelle clé publique et dudit identifiant signés numériquement par la clé privée de révocation, en exécutant avec un ordinateur d'un acteur mineur des instructions mémorisées dans une mémoire par exemple,
   ∘ une détermination d'une première équivalence entre ladite nouvelle clé publique et ledit identifiant obtenu par ledit premier décryptage et respectivement la clé publique en vigueur et l'identifiant mémorisés dans la transaction de révocation, en exécutant avec un ordinateur d'un acteur mineur des instructions mémorisées dans une mémoire par exemple,
   ∘ un deuxième décryptage avec un ordinateur et la nouvelle clé publique dudit identifiant signé numériquement par la nouvelle clé privée, en exécutant avec un ordinateur d'un acteur mineur des instructions mémorisées dans une mémoire par exemple,
   ∘ une détermination d'une deuxième équivalence entre ledit identifiant obtenu par ledit deuxième décryptage et l'identifiant mémorisé dans la transaction de révocation, en exécutant avec un ordinateur d'un acteur mineur des instructions mémorisées dans une mémoire par exemple,
   ∘ une validation dudit nouveau bloc en présence de la première équivalence et de la deuxième équivalence, en exécutant avec un ordinateur d'un acteur mineur des instructions mémorisées dans une mémoire par exemple,
- une phase de création d'un nouveau bloc incluant ladite transaction de révocation en cas de validation, en exécutant avec un ordinateur d'un acteur mineur des instructions mémorisées dans une mémoire par exemple.

La transaction de révocation émise est ainsi vérifiée lors de la phase de vérification par un acteur dit « acteur mineur » différent de l'acteur ayant émis la transaction d'identité. Une fois les vérifications requises faites, un nouveau bloc contenant la transaction de révocation pourra être miné par l'acteur mineur. Lorsqu'au moins un acteur aura validé le nouveau bloc miné par une méthode de consensus, le nouveau bloc est mémorisé dans la chaîne de blocs de l'acteur mineur. La chaîne de blocs est de plus dupliquée sur chacun des ordinateurs des acteurs du réseau.

Selon un aspect, le procédé peut comporter une étape de séquestre de clés qui comporte les opérations suivantes pour un dit acteur :
- création d'une copie de la double clés de chiffrement de cet acteur, en exécutant avec un ordinateur des instructions mémorisées dans une mémoire par exemple,
- chiffrement de la copie avec une clé publique d'une double clés de chiffrement d'un officier de sécurité dudit acteur pour obtenir un élément chiffré, en exécutant avec un ordinateur des instructions mémorisées dans une mémoire par exemple,
- puis chiffrement de l'élément chiffré avec une clé publique de chiffrement d'un acteur majeur différent dudit acteur, en exécutant avec un ordinateur des instructions mémorisées dans une mémoire par exemple.

Aucune autorité de séquestre dédiée n'est alors nécessaire. Le recours à la clé de séquestre d'un acteur du réseau se fait sur la base d'un double accord de l'officier de sécurité de cet acteur, plus l'accord de l'acteur majeur possesseur de la clé privée correspondant à la clé publique de chiffrement utilisée pour chiffrer l'élément chiffré.

Une alternative s'appuiera sur le principe connu sous l'expression anglaise « shared secret » développé par Adi Shamir et décrit à l'adresse suivante : https://en.wikipedia.org/wiki/Shamir's_Secret_Sharing

Selon un aspect, pour chiffrer numériquement des données et les transmettre à un dit acteur dénommé « destinataire », les données étant contenues dans une transaction dite « transaction de données », le procédé peut comporter les opérations suivantes : consultation de la chaîne de blocs pour obtenir la clé publique de chiffrement en vigueur affectée au destinataire des données, et chiffrement des données avec ladite clé publique de chiffrement du destinataire.

Pour signer numériquement des données, un acteur dit « expéditeur » utilise sa clé privée de signature pour signer numériquement les données, un autre acteur dit « destinataire » consultant ladite chaîne de blocs pour obtenir la clé publique de signature de l'expéditeur afin de décrypter les données signées par l'expéditeur.

De plus, les données échangées peuvent être inscrites dans des blocs de la chaîne de blocs pour être tracées et stockées de façon décentralisée.

Selon le type d'implémentation choisi, les blocs peuvent contenir une empreinte des données échangées et/ou les données échangées elles-mêmes.

Pour enregistrer dans la chaîne de blocs une transaction dite « transaction de données signées », ladite transaction de données signées comprenant des données à échanger qui sont signées numériquement, les données à échanger incluant des données originelles ou une empreinte numérique des données originelles dite « première empreinte d'émission » obtenue par une méthode de hachage, le procédé peut comporter les opérations suivantes, éventuellement réalisées à l'aide d'un ordinateur exécutant des instructions mémorisées :
- cryptage des données à échanger qui sont à signer numériquement en les signant avec la clé privée de signature d'un dit acteur dénommé « expéditeur », pour obtenir lesdites données à échanger qui sont signées numériquement,
- envoi au réseau de la transaction de données signées incluant les données à échanger qui sont signées numériquement,
- création d'un bloc dit « nouveau bloc » par un dit acteur dénommé « mineur », ledit nouveau bloc comprenant au moins une empreinte numérique du dernier bloc de la chaîne de blocs et ladite transaction de données signées,
- validation du nouveau bloc par au moins un dit acteur,
- insertion du nouveau bloc dans la chaîne de blocs après ladite validation.

Une telle transaction de données signées peut alors contenir un numéro, une identité de l'émetteur, une date et l'heure de la transaction, le type de transaction, l'empreinte des données ou les données originelles signées par l'émetteur.

Des données originelles peuvent être traitées pour être inscrites dans un ou plusieurs blocs en fonction de leurs tailles.

De manière alternative, les données originelles sont transmises sous forme d'une empreinte numérique, par exemple en appliquant un algorithme de hachage connu tel que l'algorithme SHA256. Dans ce cas, ce n'est pas la donnée originelle signée qui est inscrite dans un bloc mais une empreinte numérique signée de cette donnée originelle. Eventuellement, la donnée originelle peut être transmise par un autre canal de communication, possiblement non sécurisé, ou avec l'empreinte numérique. Dans ce type d'implémentation les données originelles peuvent parvenir au destinataire avec le numéro d'enregistrement correspondant afin de pouvoir retrouver cet enregistrement dans la chaîne de blocs.

Selon un aspect et lorsque les données à échanger prennent la forme d'une dite première empreinte d'émission, ledit mineur ayant reçu lesdites données originelles, le procédé comporte une opération de vérification réalisée avant de construire le nouveau bloc, éventuellement à l'aide d'un ordinateur exécutant des instructions mémorisées. L'opération de vérification comprend les opérations de :
- consultation de ladite chaîne de blocs pour obtenir la clé publique de signature en vigueur de l'expéditeur,
- décryptage, avec la clé publique de signature en vigueur de l'expéditeur, des données à échanger qui sont signées numériquement pour obtenir ladite première empreinte d'émission,
- réalisation d'une empreinte numérique dite « empreinte de contrôle » des données originelles,
- comparaison de l'empreinte de contrôle et de ladite première empreinte d'émission,
- rejet de la transaction en présence de différence entre l'empreinte de contrôle et de ladite première empreinte d'émission.

Une transaction peut ainsi être validée avant insertion dans un bloc en vérifiant la signature et l'adresse du propriétaire au travers de cette procédure. Si l'empreinte de contrôle et ladite première empreinte d'émission diffèrent, le mineur peut en déduire que les données à échanger n'ont pas été correctement signées. Le mineur rejette alors la transaction, par exemple en la mémorisant par ailleurs.

Eventuellement, le mineur peut aussi vérifier que la date de la transaction correspond à la date courante.

Lorsque les données à échanger prennent la forme de d'une dite première empreinte d'émission, un destinataire peut effectuer les opérations suivantes :
- vérification de ladite transaction de données signées, éventuellement à l'aide d'un ordinateur exécutant des instructions mémorisées :
   ∘ en consultant ladite chaîne de blocs pour obtenir la clé publique de signature en vigueur de l'expéditeur,
   ∘ en décryptant, avec la clé publique de signature en vigueur de l'expéditeur, les données à échanger qui sont signées numériquement pour obtenir ladite première empreinte d'émission,
   ∘ en réalisant une empreinte numérique dite « empreinte de contrôle » des données originelles,
   ∘ en comparant l'empreinte de contrôle et ladite première empreinte d'émission,
- vérification que le bloc de la chaîne de blocs contenant ladite transaction de données signées a été validé, en exécutant avec un ordinateur des instructions mémorisées dans une mémoire par exemple,
- non prise en compte de ladite transaction de données signées si l'empreinte de contrôle et ladite première empreinte d'émission sont différentes ou si ledit bloc de la chaîne de blocs contenant ladite transaction de données signées n'a pas été validé.

Ainsi lorsqu'un destinataire veut s'assurer de l'authenticité et de l'intégrité de données enregistrées et reçues, ce destinataire calcule l'empreinte des données originelles et la compare avec l'empreinte contenue dans le bloc adéquat. Les autres informations de l'enregistrement n'ont pas à être vérifiées car elles l'ont déjà été avant le minage du bloc correspondant.

Selon un aspect, pour enregistrer dans la chaîne de blocs une transaction dite « transaction de données chiffrées », ladite transaction de données chiffrées comprenant des données à échanger qui sont chiffrées numériquement, les données à échanger incluant des données d'origine ou une empreinte numérique des données d'origine dite « deuxième empreinte d'émission » obtenue par une méthode de hachage, la transaction de données chiffrées étant destinée à un dit acteur dénommé « destinataire », le procédé comporte les opérations suivantes, éventuellement réalisées à l'aide d'un ordinateur exécutant des instructions mémorisées :
- consultation de la chaîne de blocs pour obtenir la clé publique de chiffrement en vigueur affectée au destinataire,
- création d'une clé symétrique et chiffrement des données à échanger avec cette clé symétrique pour obtenir des données à échanger chiffrées numériquement avec ladite clé symétrique
- chiffrement de la clé symétrique en utilisant la clé publique de chiffrement du destinataire pour obtenir une clé symétrique chiffrée numériquement avec ladite clé publique,
- envoi au réseau de la transaction de données chiffrées, ladite transaction de données chiffrées incluant lesdites données à échanger chiffrées numériquement avec ladite clé symétrique et ladite clé symétrique chiffrée numériquement avec ladite clé publique du destinataire,
- création d'un bloc dit « nouveau bloc » par un acteur dit « mineur », ledit nouveau bloc comprenant au moins une empreinte du dernier bloc de la chaîne de blocs, ladite transaction de données chiffrées,
- validation du nouveau bloc par au moins un acteur,
- insertion du nouveau bloc dans la chaîne de blocs.

Lorsque les données à échanger prennent la forme de la deuxième empreinte d'émission, un destinataire ayant reçu les données d'origine, ledit procédé comporte les opérations suivantes, éventuellement à l'aide d'un ordinateur exécutant des instructions mémorisées :
- vérification de ladite transaction de données chiffrées par :
   ∘ déchiffrement en utilisant la clé privée de chiffrement en vigueur du destinataire de la clé symétrique chiffrée avec ladite clé publique de chiffrement du destinataire,
   ∘ déchiffrement en utilisant ladite clé symétrique des données à échanger chiffrées avec ladite clé symétrique pour obtenir la deuxième empreinte d'émission,
   ∘ réalisation d'une empreinte numérique dite « empreinte de vérification » des données d'origine,
   ∘ comparaison de l'empreinte de vérification et de ladite deuxième empreinte d'émission,
- non prise en compte de ladite transaction de données chiffrées si l'empreinte de vérification et ladite deuxième empreinte d'émission sont différentes.

Selon un aspect, au moins une transaction de données comprend l'identité de l'expéditeur et/ou un numéro d'enregistrement et/ou une date.

Par ailleurs, le procédé permet d'automatiser certaines actions. Cette propriété est désignée sous la dénomination anglaise « Smart Contract ».

Par exemple, une procédure de maintenance peut requérir l'application de procédures contraignantes pour télécharger un nouveau logiciel à implémenter sur un aéronef. Un opérateur doit vérifier l'authenticité et l'intégrité du logiciel à télécharger à bord du système avionique.

Lorsque les données à télécharger sont présentes dans la chaîne de blocs de l'invention, ces données à télécharger ont été de fait vérifiées. Les opérations de maintenance prérequises à ce téléchargement ont donc été réalisées en amont ce qui facilite le travail de l'opérateur.

Le procédé peut permettre également de donner des accès à certaines ressources en fonction du rôle et/ou du niveau d'assurance d'un acteur inscrit dans son enregistrement d'identité.

Outre un procédé, l'invention vise un système d'échange de données. Ce système d'échange de données comporte pour chaque acteur du réseau au moins un ordinateur pour mettre en œuvre ce procédé, au moins un ordinateur d'au moins un acteur mémorisant la chaîne de blocs.

L'invention et ses avantages apparaîtront avec plus de détails dans le cadre de la description qui suit avec un exemple donné à titre illustratif en référence à l'unique figure. Cette unique figure représente un système d'échange de données selon l'invention.

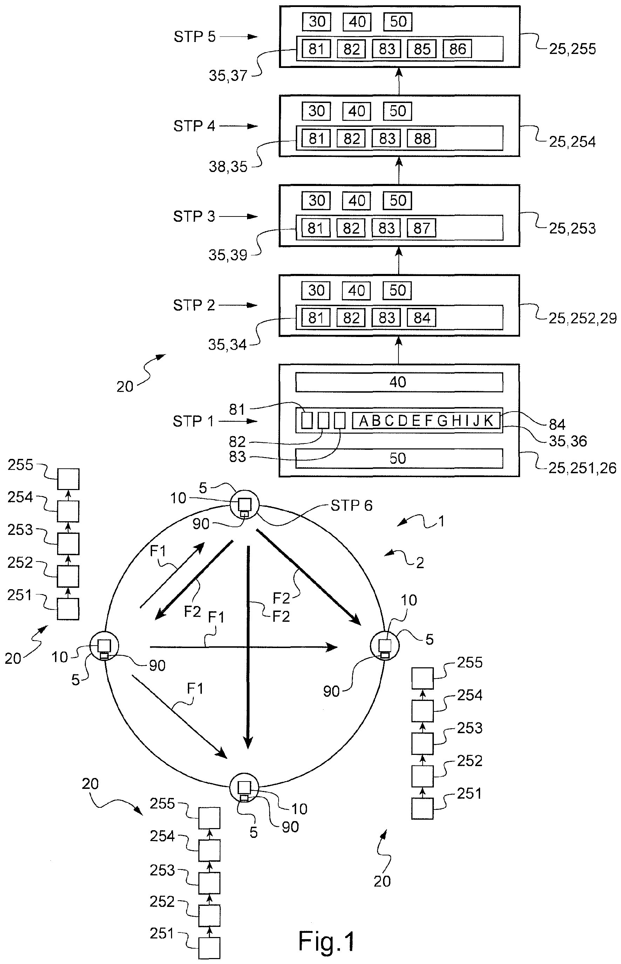

La figure 1 présente un système d'échange de données 1 au sein d'un réseau 2 informatique. Ce réseau 2 peut être un réseau privé. Selon l'exemple illustré, le réseau 2 regroupe des acteurs 5 du domaine aéronautique et spatial. Toutefois, l'invention est applicable à d'autres domaines, et par exemple au domaine automobile, au domaine maritime... Dans le cadre d'un réseau du domaine aéronautique et spatial, les acteurs 5 peuvent être des fabricants d'aéronefs, des opérateurs utilisant ces aéronefs, des organismes d'Etats, des fournisseurs des fabricants, des aéronefs...

Les acteurs peuvent être regroupés en plusieurs groupes en fonction de leurs droits au sein du réseau. Ainsi, les acteurs du réseau se partagent en des acteurs majeurs, des acteurs subordonnés et des équipements informatiques, les expressions acteurs majeurs/acteurs subordonnées/équipements informatiques étant employées par commodité pour distinguer ces différents groupes d'acteurs. Le terme « acteur » utilisé seul peut ainsi désigner un acteur majeur ou un acteur subordonné ou un équipement informatique. Un acteur majeur a le pouvoir d'enregistrer dans le réseau un nouvel acteur qui peut être un autre acteur majeur ou un acteur subordonné ou un équipement informatique. Un acteur subordonné a le pouvoir d'enregistrer dans le réseau uniquement un équipement informatique. Enfin, un équipement informatique est un organe électronique apte à communiquer avec les autres acteurs, tel qu'un ordinateur de bord d'un aéronef par exemple.

Chaque acteur 5 peut comprendre au moins un ordinateur 10 relié au réseau, cet ordinateur 10 exécutant des instructions mémorisées pour mettre en œuvre le procédé selon l'invention par exemple au travers de logiciels usuels, de circuits logiques.... Les ordinateurs des acteurs communiquent les uns avec les autres et possèdent de plus une unité de mémoire.

Ce procédé met en œuvre la technologie de la chaîne de blocs. Ainsi, le réseau utilise une chaîne de blocs 20. Cette chaîne de blocs 20 est mémorisée dans une mémoire d'ordinateurs 10 d'acteurs dénommés « mineurs » par commodité. Selon une variante, tous les acteurs représentent des nœuds du réseau 2 et mémorisent la chaîne de blocs 20. En outre, chaque acteur 5 peut utiliser un programme informatique mémorisé sur son ordinateur pour consulter la chaîne de blocs 20, indépendamment du lieu où cette chaîne de blocs est mémorisée.

Classiquement, la chaîne de blocs 20 comporte une pluralité de blocs 25, les uns à la suite des autres. Selon l'exemple représenté, la chaîne de blocs 20 comporte à un instant courant cinq blocs 251, 252, 253, 254, 255 en s'étendant d'un premier bloc 251 jusqu'au dernier bloc 255 créé.

Chaque bloc 25 inclut au moins une transaction 35. Chaque transaction 35 comporte des données mémorisées et mises à la disposition du réseau. Ces données peuvent prendre la forme d'une donnée en tant que telle, ou d'une empreinte numérique de cette donnée. Un ordinateur 10 d'un acteur peut en effet comprendre un logiciel de hachage pour transformer une donnée afin d'obtenir une empreinte numérique de cette donnée en appliquant un algorithme de hachage classique. Une telle empreinte numérique est parfois dénommée « hash ». Ainsi, la donnée peut prendre la forme d'un fichier informatique par exemple, ou d'une empreinte numérique de ce fichier informatique.

Lorsque la transaction 35 comporte l'empreinte numérique d'une donnée, la donnée en tant que telle peut aussi être incluse dans la transaction. Par exemple, une transaction comporte un logiciel informatique à embarquer dans un aéronef et une empreinte numérique de ce logiciel informatique.

De plus, au moins une transaction 35 peut comporter une information datant l'émission de la transaction 35, et/ou l'identité de l'acteur 5 ayant émis la transaction avec son ordinateur et/ou un numéro d'enregistrement qui permet de retrouver facilement la transaction.

Par ailleurs, au moins un bloc 25 peut comprendre une information 40 datant la création de ce bloc 25.

Des logiciels et des méthodes d'horodatage usuels peuvent être utilisés.

En outre, chaque bloc 25 peut comporter une mesure 50 d'une quantité de travail qui a été nécessaire pour produire le nouveau bloc. La création d'un bloc peut être entreprise par un ordinateur 10 du réseau 2 en utilisant une méthode de consensus classique, par exemple la méthode dénommée « preuve de travail ». Une telle mesure est parfois dénommée « nonce ». De manière alternative ou complémentaire, une méthode de consensus par preuve d'enjeu peut être entreprise.

Par ailleurs, chaque bloc différent du premier bloc 251 comporte une empreinte numérique 30 du bloc précédent. Ainsi, le deuxième bloc 252 comporte une empreinte numérique du premier bloc 251, et ainsi de suite.

Selon le procédé de l'invention, le réseau peut permettre de crypter les données échangées entre les acteurs, en signant numériquement les données selon une méthode usuelle à l'aide des ordinateurs 10 ou en chiffrant numériquement les données selon une méthode usuelle à l'aide des ordinateurs 10. En particulier, le procédé peut viser à utiliser une méthode cryptographique asymétrique à double clés. Chaque acteur 5 est ainsi en possession de plusieurs double clés qui incluent chacune une clé privée qui correspond à une clé publique, le couple clé privée/clé publique formant une double clés asymétrique octroyée à cet acteur. La clé privée d'un acteur est sauf incident uniquement connue de cet acteur, alors que la clé publique est visible par les autres acteurs.

Dès lors, le procédé appliqué par le système d'échange de données 1 comporte alors une étape d'initialisation STP1 visant à initialiser la chaîne de blocs.

Durant cette étape d'initialisation STP1, une autorité prédéterminée intervient ponctuellement pour miner le premier bloc 251 de la chaîne de blocs avec un ordinateur, et éventuellement un ou plusieurs blocs suivant ce premier bloc 251. Ces blocs minés par l'autorité prédéterminée sont dénommés par commodité « blocs d'initialisation 26 » pour être aisément distingués des autres blocs de la chaîne de blocs.

L'autorité prédéterminée insère avec un ordinateur dans chaque bloc d'initialisation 26 au moins une transaction dénommée par commodité « transaction d'initialisation 36 » en appliquant un algorithme usuel.

Cette transaction d'initialisation 36 inclut un enregistrement d'identité 84 affecté à un acteur. Chaque acteur identifié dans un enregistrement d'identité d'une transaction d'initialisation 36 est dénommé « acteur majeur » pour être distingué des autres acteurs.

La transaction d'initialisation 36 peut aussi comprendre un numéro d'enregistrement 81, l'identité 82 de l'autorité, une information de datation 83 de la transaction d'initialisation 36 pouvant inclure la date voire l'heure de cette transaction d'initialisation 36...

Selon un aspect, un enregistrement d'identité 84 d'un acteur comprenant des données d'identification de cet acteur qui inclut au moins un identifiant A, B, C de cet acteur. Un identifiant d'un acteur peut prendre la forme d'un nom A de cet acteur, d'une adresse B de cet acteur ou encore d'un rôle C de cet acteur au sein du réseau.

De plus, les données d'identification de cet acteur comprennent une clé publique D d'une double clés dite double clés de signature de cet acteur, une clé publique E d'une double clés dite double clés de chiffrement de cet acteur, une clé publique F d'une double clés dite double clés de révocation de cet acteur.

Eventuellement, les données d'identification de cet acteur comprennent une clé publique G d'une double clés dite double clés d'authentification.

Eventuellement, les données d'identification de cet acteur comprennent une identification H des algorithmes cryptographiques associés à ces double clés D, E, F, G à savoir respectivement une identification d'un algorithme cryptographique de signature associé à ladite double clés de signature de cet acteur, une identification d'un algorithme cryptographique de chiffrement associé à ladite double clés de chiffrement, une identification d'un algorithme cryptographique de révocation, et une identification d'un algorithme cryptographique d'authentification.

Eventuellement, les données d'identification de cet acteur comprennent une date de validité I de certaines double clés, à savoir respectivement une date de validité de ladite double clés de signature, une date de validité de ladite double clés de chiffrement et une date de validité de ladite double clés d'authentification.

Eventuellement, les données d'identification de cet acteur comprennent un niveau d'importance J de cet acteur et/ou un niveau d'assurance K de cet acteur.

Pour mettre en oeuvre l'étape d'initialisation, l'autorité prédéterminée peut exécuter des instructions mémorisées sur un ordinateur. Dès lors, l'autorité prédéterminé active un logiciel appliquant un algorithme usuel au sein d'un ordinateur pour miner chaque bloc d'initialisation, en disposant dans chaque bloc d'initialisation au moins une empreinte numérique du dernier bloc de la chaîne de blocs et un ou plusieurs enregistrement(s) d'identité relatif(s) respectivement à un ou plusieurs(s) acteur(s) majeur(s). Eventuellement, les données d'identification peuvent être signées numériquement avec une clé privée d'une double clés qui appartient à l'autorité prédéterminée.

L'autorité prédéterminée n'intervient plus à l'issue de cette étape d'initialisation, ou peut intervenir ponctuellement uniquement durant une étape de réinitialisation.

En outre, à l'issue de cette étape d'initialisation, l'inscription de nouveaux acteurs est réalisée en mettant en œuvre une étape d'acceptation d'un nouvel acteur STP2. Cette étape est illustrée par le deuxième bloc 252 de la chaîne de blocs. L'étape d'acceptation d'un nouvel acteur STP2 inclut une opération de mémorisation d'au moins un bloc d'inscription d'un nouvel acteur 29 par un dit acteur majeur ou subordonné à l'aide d'au moins un ordinateur. Un tel bloc d'inscription d'un nouvel acteur 29 comprend notamment au moins une dite transaction 34 qui inclut un enregistrement d'identité dudit nouvel acteur.

Pour mémoriser un nouvel acteur, un acteur déjà enregistré requiert l'exécution d'instructions mémorisées sur son ordinateur pour émettre dans ledit réseau une requête incluant un enregistrement d'identité 84 du nouvel acteur.

Un autre acteur du réseau mine un bloc d'un dit bloc d'identification d'un nouvel acteur 29 qui inclut cet enregistrement d'identité 84 du nouvel acteur, en exécutant des instructions mémorisées sur son ordinateur. Eventuellement l'acteur du réseau qui mine le bloc effectue des vérifications avant de miner le bloc. Par exemple, cet acteur vérifie l'identité du nouvel acteur et/ou vérifie les algorithmes cryptographiques utilisés et/ou vérifie la détention par le nouvel acteur des clés privées associées aux clés publiques de l'enregistrement. En cas d'erreur, la transaction est ignorée. Les vérifications peuvent être automatisées en étant réalisées par un ordinateur.

Si le bloc d'identification d'un nouvel acteur 29 est miné, ce bloc d'identification d'un nouvel acteur 29 doit ensuite être validé par au moins un acteur de la chaîne de blocs distinct de l'acteur ayant réalisé ledit minage.

Par exemple, le bloc d'identification est émis selon les flèches F1 dans le réseau pour validation selon des méthodes usuelles par au moins un acteur. Une validation par un nombre prédéterminé d'acteurs peut être requise. Par exemple, la validation d'un bloc peut requérir la validation du bloc par au moins deux acteurs logés sur deux continents différents. La méthode de preuve d'enjeu peut être mise en œuvre en utilisant le cas échéant le niveau d'importance des acteurs du réseau. Lorsque le nouveau bloc est validé par un acteur, cet acteur envoie cette information selon les flèches F2 dans le réseau à l'aide d'un ordinateur et d'un logiciel adéquat.

Après validation, le bloc d'identification d'un nouvel acteur 29 est mémorisé dans la chaîne de blocs. La chaîne de blocs peut être dupliquée automatiquement sur chacun des ordinateurs du réseau de manière usuelle.

En outre, les données d'identification peuvent aussi être modifiées selon une réalisation.

Ainsi, le procédé peut comporter une étape de modification STP3 illustrée avec le troisième bloc 253. Durant cette étape de modification STP3, un acteur 5 peut modifier ses données d'identification en remplaçant les données d'identification en vigueur de cet acteur dites par commodité « anciennes données d'identification », par des données d'identification dites par commodité « nouvelles données d'identification ».

Durant une étape de modification STP3 de clés, un acteur modifie au moins une dite double clés lui appartenant incluant une clé publique en vigueur à modifier et une clé privée en vigueur à modifier. Cette modification peut être entreprise le cas échéant avant expiration d'une date de validité associée à la double clés, par exemple.

Ainsi, un acteur peut solliciter un ordinateur pour exécuter des instructions mémorisées afin de générer une nouvelle double clés incluant une nouvelle clé publique et une nouvelle clé privée. Cet acteur peut solliciter un ordinateur pour exécuter des instructions mémorisées afin de créer et émettre vers le réseau une transaction d'identification 87 comprenant un identifiant A,B,C dudit acteur et la clé publique en vigueur ainsi que la nouvelle clé publique et un algorithme cryptographique associé à cette nouvelle clé publique. La transaction d'identification comprend ladite nouvelle clé publique et ledit identifiant signés numériquement avec la clé privée en vigueur ainsi que ledit identifiant signé numériquement avec la nouvelle clé privée. Cette transaction d'identification peut alors être insérée par un mineur de manière usuelle dans un nouveau bloc de la chaîne de blocs, le troisième bloc selon l'exemple donné.

Pour insérer la transaction d'identification dans un nouveau bloc, le mineur peut dans un premier temps vérifier cette transaction d'identification. Ainsi, le mineur sollicite un ordinateur pour exécuter des instructions permettant de vérifier que la clé publique en vigueur appartient à l'acteur possédant ledit identifiant en consultant la chaîne de blocs avec un ordinateur. De plus, le mineur effectue un premier décryptage avec un ordinateur de la nouvelle clé publique et de l'identifiant signés numériquement en utilisant la clé publique en vigueur, puis détermine la présence ou l'absence d'une première équivalence entre ladite nouvelle clé publique et ledit identifiant obtenu par ledit premier décryptage et respectivement la clé publique en vigueur et l'identifiant mémorisés dans la transaction d'identification.

Le mineur effectue un deuxième décryptage avec un ordinateur de l'identifiant signé numériquement en utilisant la nouvelle clé publique, puis détermine la présence ou l'absence d'une deuxième équivalence entre ledit identifiant obtenu par ledit deuxième décryptage et l'identifiant mémorisé dans la transaction d'identification.

Le mineur valide la transaction d'identification en présence de la première équivalence et de la deuxième équivalence, et mine alors le nouveau bloc selon une méthode usuelle.

Ce nouveau bloc est introduit de façon usuelle dans la chaîne de blocs, éventuellement en appliquant une méthode de consensus pour requérir la validation d'un nombre référant d'acteurs.

De même, le procédé peut aussi comporter une étape de révocation STP4 pour révoquer au moins une double clés d'un acteur incluant une clé publique en vigueur à révoquer et une clé privée en vigueur à révoquer.

Ainsi, un acteur peut solliciter un ordinateur pour exécuter des instructions mémorisées afin de générer une nouvelle double clés incluant une nouvelle clé publique et une nouvelle clé privée. Cet acteur peut solliciter un ordinateur pour exécuter des instructions mémorisées afin de créer et émettre vers le réseau une transaction de révocation 88 comprenant un identifiant A,B,C dudit acteur, la clé publique de révocation de cet acteur et la clé publique en vigueur ainsi que la nouvelle clé publique et un algorithme cryptographique associé à cette nouvelle clé publique. La transaction de révocation comprend ladite nouvelle clé publique et ledit identifiant signés numériquement avec la clé privée de révocation ainsi que ledit identifiant signé numériquement avec la nouvelle clé privée. Cette transaction de révocation peut alors être insérée par un mineur de manière usuelle dans un nouveau bloc de la chaîne de blocs, le troisième bloc selon l'exemple donné.

Pour insérer la transaction de révocation dans un nouveau bloc, le mineur peut dans un premier temps vérifier cette transaction de révocation. Ainsi, le mineur sollicite un ordinateur pour exécuter des instructions permettant de vérifier que la clé publique de révocation appartient à l'acteur possédant ledit identifiant en consultant la chaîne de blocs avec un ordinateur. De plus, le mineur effectue un premier décryptage avec un ordinateur de la nouvelle clé publique et de l'identifiant signés numériquement en utilisant la clé publique de révocation, puis détermine la présence ou l'absence d'une première équivalence entre ladite nouvelle clé publique et ledit identifiant obtenu par ledit premier décryptage et respectivement la clé publique en vigueur et l'identifiant mémorisés dans la transaction de révocation.

Le mineur effectue un deuxième décryptage avec un ordinateur de l'identifiant signé numériquement en utilisant la nouvelle clé publique, puis détermine la présence ou l'absence d'une deuxième équivalence entre ledit identifiant obtenu par ledit deuxième décryptage et l'identifiant mémorisé dans la transaction de révocation.

Le mineur valide la transaction de révocation en présence de la première équivalence et de la deuxième équivalence, et mine alors le nouveau bloc selon une méthode usuelle.

La chaîne de blocs peut aussi mémoriser des données à échanger qui différent des données d'identification.

Ainsi, une transaction dénommée « transaction de données 37 » par commodité peut contenir des données dites « données à échanger » d'un autre ordre, par exemple des données aéronautiques.

Pour signer numériquement des données, un acteur dit « expéditeur » sollicite un ordinateur en utilisant sa clé privée de signature pour signer numériquement les données, à l'aide d'un algorithme usuel par exemple. Un autre acteur dit « destinataire » peut alors consulter ladite chaîne de blocs avec un programme informatique d'un ordinateur 10 pour obtenir la clé publique de signature de l'expéditeur afin de décrypter les données signées par l'expéditeur.

Par exemple, le procédé permet d'enregistrer dans la chaîne de blocs une transaction dite « transaction de données signées » durant une étape STP5. La transaction de données signées comprend des données à échanger signées numériquement, les données à échanger incluant des données originelles 85 et/ou une empreinte numérique des données originelles dite « première empreinte d'émission 86 ».

Un expéditeur peut alors crypter les données à échanger en les signant avec sa clé privée pour obtenir des données dites « données à échanger signées ».

Selon une option, un expéditeur peut signer les données originelles pour obtenir les données à échanger signées.

Selon une autre option, l'expéditeur utilise un algorithme usuel de hachage avec un calculateur pour obtenir la première empreinte d'émission 86. L'expéditeur signe alors avec sa clé privée de signature cette première empreinte d'émission pour obtenir les données à échanger signées. La transaction de données signées peut alors inclure les données à échanger signées sous la forme d'une première empreinte d'émission signée. Les données originelles non signées peuvent de plus être incluses dans la transaction ou transmises par un autre canal à un destinataire, par exemple de la main à la main, par courrier...

L'expéditeur envoie alors la transaction de données signées incluant les données à échanger signées au réseau avec un ordinateur.

Un acteur dit « mineur » du réseau crée alors un bloc dit « nouveau bloc » par commodité à l'aide d'un algorithme usuel et d'un calculateur, ce nouveau bloc comprenant au moins une empreinte numérique du dernier bloc de la chaîne de blocs, ladite transaction de données signées, voire une mesure d'une quantité de travail qui a été nécessaire pour produire le nouveau bloc.

Ce nouveau bloc est émis selon les flèches F1 dans le réseau pour validation selon des méthodes usuelles par au moins un acteur. Une validation par un nombre prédéterminé d'acteurs peut être requise. Par exemple, la validation d'un bloc peut requérir la validation du bloc par au moins deux acteurs logés sur deux continents différents.

Lorsque le nouveau bloc est validé par un acteur, cet acteur envoie cette information selon les flèches F2.

Après validation, le nouveau bloc est inséré en dernière position dans la chaîne de blocs.

Lorsque les données à échanger sont du type « première empreinte d'émission » et si les mineurs ont reçu en parallèle les données originelles, le procédé peut comporter une phase de vérification réalisée avant de construire le nouveau bloc.

Dès lors, un mineur peut consulter avec un programme informatique d'un ordinateur la chaîne de blocs pour obtenir la clé publique de signature en vigueur de l'expéditeur. Le mineur décrypte les données à échanger signées avec cette clé publique de signature, en appliquant un algorithme usuel par exemple, pour obtenir la première empreinte d'émission. En parallèle, le mineur réalise avec un calculateur une empreinte numérique dite « empreinte de contrôle » des données originelles et compare l'empreinte de contrôle et la première empreinte d'émission.

En présence de différence(s) entre l'empreinte de contrôle et la première empreinte d'émission, le nouveau bloc n'est par exemple pas créé.

Si le bloc est créé, un utilisateur peut solliciter la chaîne de blocs pour accéder à la transaction de données signées.

Ainsi, le destinataire sollicite un programme informatique d'un calculateur pour consulter la chaîne de blocs afin d'en extraire la clé publique de signature en vigueur de l'expéditeur, à savoir la clé publique de signature en vigueur lors de l'émission de la transaction concernée.

Le destinataire met en œuvre un algorithme de décryptage pour décrypter les données à échanger signées avec cette clé publique de signature, afin d'obtenir les données à échanger non signées.

Eventuellement, lorsque les données à échanger prennent la forme de la première empreinte d'émission, les données à échanger non signées prennent la forme de la première empreinte d'émission.

De plus, le destinataire peut vérifier la transaction de données signées avant d'utiliser les données concernées.

En effet, le destinataire peut réaliser une empreinte numérique des données originelles reçues par ailleurs dite « empreinte de contrôle » par commodité, et compare l'empreinte de contrôle et la première empreinte d'émission.

Ce destinataire observe aussi la chaîne de blocs pour vérifier que le bloc de la chaîne de blocs contenant la transaction de données signées a été validé.

Dès lors, le destinataire ignore la transaction de données chiffrées si l'empreinte de contrôle et la première empreinte d'émission sont différentes et/ou si ledit bloc de la chaîne de blocs contenant ladite transaction de données signées n'a pas été validé.

Par exemple, si les données originelles concernent un logiciel à embarquer dans un aéronef, un opérateur n'installe pas le logiciel.

Selon un autre aspect, le procédé peut permettre de chiffrer numériquement des données et de les transmettre à un acteur dit « destinataire ».

Un expéditeur peut alors consulter la chaîne de blocs avec un programme informatique d'un calculateur pour en extraire la clé publique de chiffrement en vigueur affectée au destinataire des données.

De plus, l'expéditeur crée une clé symétrique, par exemple à partir d'une méthode usuelle et de sa double clés de chiffrement. Une telle clé symétrique est parfois dénommée « clé de cession ». L'expéditeur chiffre alors les données à échanger avec la clé symétrique, en utilisant un algorithme de chiffrement éventuellement usuel, ce qui minimise les temps de calcul. De plus, l'expéditeur chiffre la clé symétrique avec la clé publique de chiffrement du destinataire en utilisant un algorithme de chiffrement, par exemple usuel, pour obtenir une clé symétrique chiffrée numériquement.

Selon une option, un expéditeur peut alors chiffrer des données d'origine pour obtenir les données à échanger chiffrées.

Selon une autre option, l'expéditeur utilise un algorithme usuel avec un calculateur pour obtenir une empreinte dite « deuxième empreinte d'émission » des données d'origine. L'expéditeur chiffre alors cette deuxième empreinte d'émission avec la clé symétrique pour obtenir les données à échanger chiffrées.

Les données à échanger chiffrées sont éventuellement envoyées par un autre canal au destinataire.

Les données à échanger chiffrées et la clé symétrique chiffrée sont aussi envoyées au réseau pour enregistrer la transaction dans la chaîne de blocs. Une telle transaction est dite par commodité « transaction de données chiffrées ». La transaction de données chiffrées peut ainsi inclure les données à échanger chiffrées avec ladite clé symétrique et la clé symétrique chiffrée avec ladite clé publique du destinataire. Les données d'origine peuvent être incluses dans la transaction ou transmises par un autre canal à un destinataire, par exemple de la main à la main, par courrier...

L'expéditeur envoie alors la transaction de données chiffrées incluant les données à échanger et la clé symétrique chiffrée au réseau avec un ordinateur.

Un acteur dit « mineur » du réseau crée alors un bloc dit « nouveau bloc », ce nouveau bloc comprenant au moins une empreinte numérique du dernier bloc de la chaîne de blocs, ladite transaction de données chiffrées, voire une mesure d'une quantité de travail qui a été nécessaire pour produire le nouveau bloc.

Ce nouveau bloc est émis selon les flèches F1 dans le réseau pour validation selon des méthodes usuelles par au moins un acteur. Lorsque le nouveau bloc est validé par un acteur cet acteur envoie cette information selon les flèches F2. Après validation, le nouveau bloc est inséré en dernière position dans la chaîne de blocs.

Ainsi, le destinataire peut solliciter la chaîne de blocs pour accéder à la transaction de données chiffrées. Le destinataire met en œuvre un algorithme de déchiffrement pour déchiffrer la clé symétrique contenue dans la transaction avec sa clé privée de chiffrement. Ensuite, le destinataire déchiffre les données à échanger chiffrées présentes dans la transaction avec ladite clé symétrique.

Lorsque les données à échanger prennent la forme de la deuxième empreinte d'émission, le destinataire obtient ainsi la deuxième empreinte d'émission.

En outre, le destinataire peut réaliser une empreinte numérique des données d'origine reçues par ailleurs dite « empreinte de vérification » par commodité, et compare l'empreinte de vérification et la deuxième empreinte d'émission.

Ce destinataire observe aussi la chaîne de blocs pour vérifier que le bloc de la chaîne de blocs contenant la transaction de données signées a été validé.

Dès lors, le destinataire ignore la transaction de données chiffrées si l'empreinte de vérification et ladite deuxième empreinte d'émission sont différentes ou si ledit bloc de la chaîne de blocs contenant ladite transaction de données chiffrées n'a pas été validé.

Selon un autre aspect, le procédé peut comporter une étape de séquestre de clés STP6 pour chaque acteur. Durant cette étape, un acteur crée une copie 90 de sa double clés de chiffrement. Dès lors, cette copie 90 est chiffrée à l'aide d'un ordinateur exécutant des informations mémorisées et d'une clé publique d'une double clés d'un officier de sécurité dudit acteur. La copie ainsi chiffrée est alors à nouveau chiffrée avec une clé publique de chiffrement d'un acteur majeur différent dudit acteur ayant créé la copie 90.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

En particulier, un même bloc peut comprendre des transactions de diverses natures. Par exemple, un bloc peut comprendre une transaction de données requise par un acteur et une transaction de révocation requise par un autre acteur.

## Revendications

1. Procédé pour partager des données entre des acteurs (5) d'un réseau, ledit procédé comprenant une étape de cryptographie des données par une méthode cryptographique asymétrique à double clés, chaque acteur (5) possédant au moins une dite double clés,
où, une chaîne de blocs (20) étant mise en œuvre, un bloc (25) comprenant une empreinte numérique (30) du bloc qui le précède dans la chaîne de blocs (20) et au moins une transaction (35) qui comprend des données à partager, au moins un bloc étant un bloc d'initialisation (26) initialisant la chaîne de blocs et au moins un bloc étant un bloc d'inscription d'un nouvel acteur, au moins un dit acteur (5) étant un acteur majeur, au moins un dit acteur (5) étant un acteur subordonné et au moins un dit acteur (5) étant un équipement informatique, un dit acteur majeur étant autorisé à requérir une adhésion audit réseau d'un nouvel acteur majeur ainsi que d'un acteur subordonné et d'un nouvel équipement informatique, un dit acteur subordonné étant uniquement autorisé à requérir une adhésion audit réseau d'un nouvel équipement informatique, le procédé comporte :
- une étape d'initialisation (STP1) de la chaîne de blocs qui comporte une opération de mémorisation dudit au moins un bloc d'initialisation (26) dans la chaîne de blocs par une autorité prédéterminée à l'aide d'au moins un ordinateur, ledit au moins un bloc d'initialisation (26) comprenant au moins une dite transaction (36) qui inclut un enregistrement d'identité (84) d'un acteur majeur,
- une étape d'acceptation d'un nouvel acteur (STP2) dans la chaîne de blocs qui inclut une opération de mémorisation d'au moins un bloc d'inscription d'un nouvel acteur (29) dans la chaîne de blocs par un dit acteur majeur ou subordonné à l'aide d'au moins un ordinateur, ledit au moins un bloc d'inscription d'un nouvel acteur (29) comprenant au moins une dite transaction (34) qui inclut un enregistrement d'identité (84) dudit nouvel acteur,
un dit enregistrement d'identité (84) d'un acteur majeur/subordonné ou équipement informatique comprenant des données d'identification de cet acteur majeur/ acteur subordonné ou équipement informatique qui inclut au moins un identifiant de cet acteur majeur / acteur subordonné ou équipement informatique, une clé publique d'une double clés dite double clés de signature de cet acteur majeur / acteur subordonné ou équipement informatique destinée à la signature de données,
une clé publique d'une double clés dite double clés de chiffrement de cet acteur majeur/ acteur subordonné ou équipement informatique destinée au chiffrement de données, une clé publique d'une double clés dite double clés de révocation de cet acteur majeur / acteur subordonné ou équipement informatique destinée à la révocation au moins de la double clés de chiffrement et de la double clés de signature de cet acteur majeur / acteur subordonné ou équipement informatique,
ladite autorité n'intervenant plus à l'issue de l'étape d'initialisation ou n'intervenant que lors d'une étape de réinitialisation d'un acteur suite à une révocation de la double clés de révocation de cet acteur.

2. Procédé selon la revendication 1,
**caractérisé en ce qu'**un dit enregistrement d'identité (84) d'un acteur majeur/ acteur subordonné ou équipement informatique comporte une identification d'un algorithme cryptographique de signature associé à ladite double clés de signature de cet acteur majeur/ acteur subordonné ou équipement informatique, une identification d'un algorithme cryptographique de chiffrement associé à ladite double clés de chiffrement de cet acteur majeur/ acteur subordonné ou équipement informatique, une identification d'un algorithme cryptographique de révocation associé à ladite double clés de révocation de cet acteur majeur/ acteur subordonné ou équipement informatique.

3. Procédé selon l'une quelconque des revendications 1 à 2,
**caractérisé en ce qu'**un dit enregistrement d'identité (84) d'un acteur majeur/ acteur subordonné ou équipement informatique comporte une date de validité de ladite double clés de signature de cet acteur majeur/ acteur subordonné ou équipement informatique, et une date de validité de ladite double clés de chiffrement de cet acteur majeur/ acteur subordonné ou équipement informatique.

4. Procédé selon l'une quelconque des revendications 1 à 3,
**caractérisé en ce qu'**un dit enregistrement d'identité (84) d'un acteur majeur/ acteur subordonné ou équipement informatique comporte un niveau d'importance de cet acteur majeur/ acteur subordonné ou équipement informatique utilisé lors d'une opération de validation d'un bloc par preuve d'enjeu créé par cet acteur majeur/ acteur subordonné ou équipement informatique.

5. Procédé selon l'une quelconque des revendications 1 à 4,
**caractérisé en ce que** ledit au moins un dit identifiant d'un acteur majeur/ acteur subordonné ou équipement informatique inclut un nom de cet acteur majeur/ acteur subordonné ou équipement informatique ou une adresse de cet acteur majeur/ acteur subordonné ou équipement informatique.

6. Procédé selon l'une quelconque des revendications 1 à 5,
**caractérisé en ce que** lesdites données d'identification d'un acteur incluent un niveau d'assurance de cet acteur permettant d'indiquer de quelle manière cet acteur a été identifié.

7. Procédé selon l'une quelconque des revendications 1 à 6,
**caractérisé en ce qu'**un dit enregistrement d'identité (84) d'un acteur majeur/ acteur subordonné ou équipement informatique comporte une clé publique d'une double clés dite « double clés d'authentification » de cet acteur majeur/ acteur subordonné ou équipement informatique destinée à l'authentification de cet acteur majeur/ acteur subordonné ou équipement informatique.

8. Procédé selon l'une quelconque des revendications 1 à 7,
**caractérisé en ce que** ladite opération de mémorisation d'au moins un bloc d'inscription d'un nouvel acteur (29) comporte les opérations suivantes :
- émission dans ledit réseau d'une requête incluant un dit enregistrement d'identité (84) dudit nouvel acteur,
- minage par un dit acteur de la chaîne de blocs d'un dit bloc d'identification d'un nouvel acteur incluant ledit enregistrement d'identité (84) dudit nouvel acteur,
- validation dudit bloc par au moins un acteur de la chaîne de blocs distinct de l'acteur ayant réalisé ledit minage et mémorisation après ladite validation dudit bloc dans la chaîne de blocs.

9. Procédé selon l'une quelconque des revendications 1 à 8, **caractérisé en ce que** le procédé comporte une étape de modification de clés (STP3) durant laquelle un dit acteur modifie au moins une dite double clés lui appartenant incluant une clé publique en vigueur et une clé privée en vigueur, ladite étape de modification comprenant les opérations suivantes :
- génération d'un nouvelle double clés incluant une nouvelle clé publique et une nouvelle clé privée,
- création et émission vers le réseau d'une transaction dite « transaction d'identification » comprenant un identifiant dudit acteur et la clé publique en vigueur ainsi que la nouvelle clé publique et un algorithme cryptographique associé à cette nouvelle clé publique, ladite transaction d'identification comprenant ladite nouvelle clé publique et ledit identifiant signés numériquement avec la clé privée en vigueur ainsi que ledit identifiant signé numériquement avec la nouvelle clé privée,
- insertion de ladite transaction d'identification dans un nouveau bloc de la chaîne de blocs.

10. Procédé selon la revendication 9,
**caractérisé en ce que** ladite opération d'insertion de ladite transaction d'identification dans un nouveau bloc de la chaîne de blocs comporte :
- une phase de vérification de ladite transaction d'identification par au moins un acteur dudit réseau qui inclut :
o une vérification que ladite clé publique en vigueur appartient à l'acteur possédant ledit identifiant en consultant la chaîne de blocs avec un ordinateur,
o un premier décryptage avec un ordinateur et la clé publique en vigueur de ladite nouvelle clé publique et dudit identifiant signés numériquement par la clé privée en vigueur,
o une détermination d'une première équivalence entre ladite nouvelle clé publique et ledit identifiant obtenu par ledit premier décryptage et respectivement la clé publique en vigueur et l'identifiant mémorisés dans la transaction d'identification,
o un deuxième décryptage avec un ordinateur et la nouvelle clé publique dudit identifiant signé numériquement par la nouvelle clé privée,
o une détermination d'une deuxième équivalence entre ledit identifiant obtenu par ledit deuxième décryptage et l'identifiant mémorisé dans la transaction d'identification,
∘ validation de ladite transaction d'identification en présence de la première équivalence et de la deuxième équivalence,
- une phase de création d'un nouveau bloc incluant ladite transaction d'identification.

11. Procédé selon l'une quelconque des revendications 1 à 10,
**caractérisé en ce que** le procédé comporte une étape de révocation (STP4) durant laquelle un dit acteur révoque au moins une dite double clés lui appartenant incluant une clé publique en vigueur et une clé privée en vigueur, ladite étape de révocation comprenant les opérations suivantes :
- génération d'un nouvelle double clés incluant une nouvelle clé publique et une nouvelle clé privée devant remplacer la double clés révoquée incluant une clé publique en vigueur et une clé privé en vigueur,
- création et émission vers le réseau d'une transaction de révocation comprenant un identifiant dudit acteur et la clé publique de révocation de cet acteur et la clé publique en vigueur à révoquer ainsi que la nouvelle clé publique et un algorithme cryptographique associé à cette nouvelle clé publique, ladite transaction de révocation comprenant ladite nouvelle clé publique et ledit identifiant signés numériquement avec la clé privée de révocation ainsi que ledit identifiant signé numériquement avec la nouvelle clé privée,
- insertion de ladite transaction de révocation dans un nouveau bloc de la chaîne de blocs.

12. Procédé selon la revendication 11,
**caractérisé en ce que** ladite opération d'insertion de ladite transaction de révocation dans un nouveau bloc de la chaîne de blocs comporte :
- une phase de vérification de ladite transaction de révocation par au moins un acteur dudit réseau qui inclut :
o une vérification que ladite clé publique de révocation appartient à l'acteur possédant ledit identifiant en consultant la chaîne de blocs avec un ordinateur,
o un premier décryptage avec un ordinateur et la clé publique de révocation de ladite nouvelle clé publique et dudit identifiant signés numériquement par la clé privée de révocation,
∘ une détermination d'une première équivalence entre ladite nouvelle clé publique et ledit identifiant obtenu par ledit premier décryptage et respectivement la clé publique en vigueur et l'identifiant mémorisés dans la transaction de révocation,
∘ un deuxième décryptage avec un ordinateur et la nouvelle clé publique dudit identifiant signé numériquement par la nouvelle clé privée,
∘ une détermination d'une deuxième équivalence entre ledit identifiant obtenu par ledit deuxième décryptage et l'identifiant mémorisé dans la transaction de révocation,
∘ validation dudit nouveau bloc en présence de la première équivalence et de la deuxième équivalence,
- une phase de création d'un nouveau bloc incluant ladite transaction de révocation.

13. Procédé selon l'une quelconque des revendications 1 à 12,
**caractérisé en ce que** ledit procédé comporte une étape de séquestre de clés (STP6) qui comporte les opérations suivantes pour un dit acteur :
- création d'une copie de la double clés de chiffrement de cet acteur,
- chiffrement de la copie avec une clé publique d'une double clés de chiffrement d'un officier de sécurité dudit acteur, puis chiffrement avec une clé publique de chiffrement d'un acteur majeur différent dudit acteur.

14. Procédé selon l'une quelconque des revendications 1 à 13,
**caractérisé en ce que** pour enregistrer dans la chaîne de blocs une transaction dite « transaction de données signées », ladite transaction de données signées comprenant des données à échanger qui sont signées numériquement, les données à échanger incluant des données originelles ou une empreinte numérique des données originelles dite « première empreinte d'émission » obtenue par une méthode de hachage, le procédé comporte les opérations suivantes :
- cryptage des données à échanger qui sont à signer numériquement en les signant avec la clé privée de signature d'un dit acteur dénommé « expéditeur », pour obtenir lesdites données à échanger qui sont signées numériquement,
- envoi au réseau de la transaction de données signées incluant les données à échanger qui sont signées numériquement,
- création d'un bloc dit « nouveau bloc » par un dit acteur dénommé « mineur », ledit nouveau bloc comprenant au moins une empreinte numérique du dernier bloc de la chaîne de blocs et ladite transaction de données signées,
- validation du nouveau bloc par au moins un dit acteur,
- insertion du nouveau bloc dans la chaîne de blocs après ladite validation.

15. Procédé selon la revendication 14,
**caractérisé en ce que**, les données à échanger prenant la forme d'une dite première empreinte d'émission, ledit mineur ayant reçu lesdites données originelles, le procédé comporte une opération de vérification réalisée avant de construire le nouveau bloc comprenant les opérations de :
- consultation de ladite chaîne de blocs pour obtenir la clé publique de signature en vigueur de l'expéditeur,
- décryptage, avec la clé publique de signature en vigueur de l'expéditeur, des données à échanger qui sont signées numériquement pour obtenir ladite première empreinte d'émission,
- réalisation d'une empreinte numérique dite « empreinte de contrôle » des données originelles,
- comparaison de l'empreinte de contrôle et de ladite première empreinte d'émission.

16. Procédé selon la revendication 15,
**caractérisé en ce que**, les données à échanger prenant la forme d'une dite première empreinte d'émission, un destinataire effectue les opérations suivantes :
- vérification de ladite transaction de données signées :
o en consultant ladite chaîne de blocs pour obtenir la clé publique de signature en vigueur de l'expéditeur,
∘ en décryptant, avec la clé publique de signature en vigueur de l'expéditeur, les données à échanger qui sont signées numériquement pour obtenir ladite première empreinte d'émission,
∘ en réalisant une empreinte numérique dite « empreinte de contrôle » des données originelles,
∘ en comparant l'empreinte de contrôle et ladite première empreinte d'émission,
- vérification que le bloc de la chaîne de blocs contenant ladite transaction de données signées a été validé,
- non prise en compte de ladite transaction de données signées si l'empreinte de contrôle et ladite première empreinte d'émission sont différentes ou si ledit bloc de la chaîne de blocs contenant ladite transaction de données signées n'a pas été validé.

17. Procédé selon l'une quelconque des revendications 1 à 16,
**caractérisé en ce que** pour enregistrer dans la chaîne de blocs une transaction dite « transaction de données chiffrées », ladite transaction de données chiffrées comprenant des données à échanger qui sont chiffrées numériquement, les données à échanger incluant des données d'origine ou une empreinte numérique des données d'origine dite « deuxième empreinte d'émission » obtenue par une méthode de hachage, la transaction de données chiffrées étant destinée à un dit acteur dénommé « destinataire », le procédé comporte les opérations suivantes :
- consultation de la chaîne de blocs pour obtenir la clé publique de chiffrement en vigueur affectée au destinataire,
- création d'une clé symétrique et chiffrement des données à échanger avec cette clé symétrique pour obtenir des données à échanger chiffrées numériquement avec ladite clé symétrique,
- chiffrement de la clé symétrique en utilisant la clé publique de chiffrement du destinataire pour obtenir une clé symétrique chiffrée numériquement avec ladite clé publique,
- envoi au réseau de la transaction de données chiffrées, ladite transaction de données chiffrées incluant lesdites données à échanger chiffrées numériquement avec ladite clé symétrique et ladite clé symétrique chiffrée numériquement avec ladite clé publique du destinataire,
- création d'un bloc dit « nouveau bloc » par un acteur dit « mineur », ledit nouveau bloc comprenant au moins une empreinte du dernier bloc de la chaîne de blocs, ladite transaction de données chiffrées,
- validation du nouveau bloc par au moins un acteur,
- insertion du nouveau bloc dans la chaîne de blocs.

18. Procédé selon la revendication 17,
**caractérisé en ce que**, les données à échanger prenant la forme de la deuxième empreinte d'émission, un destinataire ayant reçu les données d'origine, ledit procédé comporte les opérations suivantes :
- vérification de ladite transaction de données chiffrées par :
∘ déchiffrement en utilisant la clé privée de chiffrement en vigueur du destinataire de la clé symétrique chiffrée avec ladite clé publique de chiffrement du destinataire,
∘ déchiffrement en utilisant ladite clé symétrique des données à échanger chiffrées avec ladite clé symétrique pour obtenir la deuxième empreinte d'émission,
∘ réalisation d'une empreinte numérique dite « empreinte de vérification » des données d'origine,
∘ comparaison de l'empreinte de vérification et de ladite deuxième empreinte d'émission,
- non prises en compte de ladite transaction de données chiffrées si l'empreinte de vérification et ladite deuxième empreinte d'émission sont différentes.

19. Procédé l'une quelconque des revendications 14 à 18,
**caractérisé en ce qu'**au moins une transaction de données comprend l'identité de l'expéditeur ou un numéro d'enregistrement ou une date.

20. Système d'échange de données (1),
**caractérisé en ce que** ledit système d'échange de données (1) comporte pour chaque acteur (5) du réseau (2) au moins un ordinateur (10) pour mettre en œuvre ledit procédé selon l'une quelconque des revendications 1 à 19, au moins un ordinateur d'au moins un acteur (5) mémorisant ladite chaîne de blocs.

## Patentansprüche

1. Verfahren zur gemeinsamen Nutzung von Daten zwischen Teilnehmern (5) in einem Netzwerk, wobei das Verfahren einen Schritt des Verschlüsselns von Daten durch ein asymmetrisches kryptographisches Doppelschlüssel-Verschlüsselungsverfahren umfasst, wobei jeder Teilnehmer (5) mindestens einen der Doppelschlüssel hat,
wobei eine Blockchain (20) verwendet wird, bei der ein Block (25) einen digitalen Fingerabdruck (30) des in der Blockchain (20) vorangehenden Blocks und mindestens eine Transaktion (35), die gemeinsam zu nutzende Daten enthält, umfasst, bei der mindestens ein Block ein Initialisierungsblock (26) ist, der die Blockchain initialisiert, und mindestens ein Block ein Block zur Registrierung eines neuen Teilnehmers ist, wobei mindestens ein solcher Teilnehmer (5) ein Hauptteilnehmer ist, wobei mindestens ein solcher Teilnehmer (5) ein Nebenteilnehmer ist und mindestens ein solcher Teilnehmer (5) eine Datenverarbeitungsanlage ist, wobei ein solcher Hauptteilnehmer befugt ist, die Mitgliedschaft eines neuen Hauptteilnehmers sowie eines Nebenteilnehmers und einer neuen Datenverarbeitungsanlage in dem Netzwerk anzufordern, wobei ein solcher Nebenteilnehmer nur befugt ist, die Mitgliedschaft einer neuen Datenverarbeitungsanlage in dem Netzwerk anzufordern, wobei das Verfahren umfasst:
- einen Schritt des Initialisierens (STP1) der Blockchain, der eine Operation des Speicherns des mindestens einen Initialisierungsblocks (26) in der Blockchain durch eine vorgegebene Autorität unter Verwendung mindestens eines Computers umfasst, wobei der mindestens eine Initialisierungsblock (26) mindestens eine besagte Transaktion (36) umfasst, die einen Identitätsdatensatz (84) eines Hauptteilnehmers enthält,
- einen Schritt des Aufnehmens eines neuen Teilnehmers (STP2) in der Blockchain, der eine Operation des Speicherns mindestens eines neuen Registrierungsblocks (29) eines neuen Teilnehmers in der Blockchain durch den Haupt- oder Nebenteilnehmer unter Verwendung mindestens eines Computers umfasst, wobei der mindestens eine Registrierungsblock (29) des neuen Teilnehmers mindestens eine besagte Transaktion (34) umfasst, die einen Identitätsdatensatz (84) des neuen Teilnehmers enthält,
wobei ein besagter Identitätsdatensatz (84) eines Hauptteilnehmers / Nebenteilnehmers oder einer Datenverarbeitungsanlage Identifikationsdaten dieses Hauptteilnehmers / Nebenteilnehmers oder der Datenverarbeitungsanlage umfasst, die mindestens enthalten: eine Kennung dieses Hauptteilnehmers / Nebenteilnehmers oder dieser Datenverarbeitungsanlage, einen öffentlichen Schlüssel eines Doppelschlüssels, als Signatur-Doppelschlüssel dieses Hauptteilnehmers / Nebenteilnehmers oder dieser Datenverarbeitungsanlage bezeichnet, der zum Signieren von Daten bestimmt ist,
einen öffentlichen Schlüssel eines Doppelschlüssels, als Chiffrier-Doppelschlüssel dieses Hauptteilnehmers / Nebenteilnehmers oder dieser Datenverarbeitungsanlage bezeichnet, der zum Chiffrieren von Daten bestimmt ist, einen öffentlichen Schlüssel eines Doppelschlüssels, als Widerrufs-Doppelschlüssel dieses Hauptteilnehmers / Nebenteilnehmers oder dieser Datenverarbeitungsanlage bezeichnet, der zum Widerrufen des Chiffrier-Doppelschlüssels und/oder des Signatur-Doppelschlüssels dieses Hauptteilnehmers / Nebenteilnehmers oder dieser Datenverarbeitungsanlage bestimmt ist,
wobei die Autorität am Ende des Initialisierungsschrittes nicht mehr eingreift oder nur während eines Schrittes der Reinitialisierung eines Teilnehmers nach einem Widerruf des Widerrufs-Doppelschlüssels dieses Teilnehmers eingreift.

2. Verfahren nach Anspruch 1,
**dadurch gekennzeichnet, dass** ein Identitätsdatensatz (84) eines Hauptteilnehmers / Nebenteilnehmers oder einer Datenverarbeitungsanlage eine Identifizierung eines kryptographischen Signaturalgorithmus, der mit den Signatur-Doppelschlüsseln dieses Hauptteilnehmers / Nebenteilnehmers oder der Datenverarbeitungsanlage verknüpft ist, eine Identifizierung eines kryptographischen Chiffrieralgorithmus, der mit den Chiffrier-Doppelschlüsseln dieses Hauptteilnehmers / Nebenteilnehmers oder der Datenverarbeitungsanlage verknüpft ist, und eine Identifizierung eines kryptographischen Widerrufsalgorithmus, der mit den Widerrufs-Doppelschlüsseln dieses Hauptteilnehmers / Nebenteilnehmers oder der Datenverarbeitungsanlage verknüpft ist, umfasst.

3. Verfahren nach einem der Ansprüche 1 bis 2,
**dadurch gekennzeichnet, dass** ein besagter Identitätsdatensatz (84) eines Hauptteilnehmers / Nebenteilnehmers oder einer Datenverarbeitungsanlage ein Gültigkeitsdatum des Signatur-Doppelschlüssels dieses Hauptteilnehmers / Nebenteilnehmers oder der Datenverarbeitungsanlage und ein Gültigkeitsdatum der Chiffrier-Doppelschlüssel dieses Hauptteilnehmers / Nebenteilnehmers oder der Datenverarbeitungsanlage enthält.

4. Verfahren nach einem der Ansprüche 1 bis 3,
**dadurch gekennzeichnet, dass** ein besagter Identitätsdatensatz (84) eines Hauptteilnehmers / Nebenteilnehmers oder einer Datenverarbeitungsanlage eine Wichtigkeitsstufe dieses Hauptteilnehmers / Nebenteilnehmers oder der Datenverarbeitungsanlage umfasst, die während einer Validierungsoperation eines Blocks als durch diesen Hauptteilnehmer / Nebenteilnehmer oder diese Datenverarbeitungsanlage erstellter Beteiligungsnachweis verwendet wird.

5. Verfahren nach einem der Ansprüche 1 bis 4,
**dadurch gekennzeichnet, dass** die mindestens eine Kennung eines Hauptteilnehmers/Nebenteilnehmers oder einer Datenverarbeitungsanlage einen Namen dieses Hauptteilnehmers/Nebenteilnehmers oder dieser Datenverarbeitungsanlage oder eine Adresse dieses Hauptteilnehmers/Nebenteilnehmers oder dieser Datenverarbeitungsanlage enthält.

6. Verfahren nach einem der Ansprüche 1 bis 5,
**dadurch gekennzeichnet, dass** die Identifikationsdaten eines Teilnehmers einen Grad an Sicherheit dieses Teilnehmers beinhalten, der es erlaubt anzugeben, auf welche Weise dieser Teilnehmer identifiziert worden ist.

7. Verfahren nach einem der Ansprüche 1 bis 6,
**dadurch gekennzeichnet, dass** ein besagter Identitätsdatensatz (84) eines Hauptteilnehmers / eines Nebenteilnehmers oder einer Datenverarbeitungsanlage einen öffentlichen Schlüssel eines als "Authentifizierungsdoppelschlüssel" bezeichneten Doppelschlüssels dieses Hauptteilnehmers / dieses Nebenteilnehmers oder dieser Datenverarbeitungsanlage enthält, der für die Authentifizierung dieses Hauptteilnehmers / dieses Nebenteilnehmers oder dieser Datenverarbeitungsanlage bestimmt ist.

8. Verfahren nach einem der Ansprüche 1 bis 7,
**dadurch gekennzeichnet, dass** die Operation des Speicherns mindestens eines Registrierungsblocks eines neuen Teilnehmers (29) die folgenden Operationen umfasst:
- Aussenden einer Anforderung in das Netzwerk, die den Identitätsdatensatz (84) des neuen Teilnehmers enthält,
- Mining, durch einen Teilnehmer der Blockchain, eines Identifizierungsblocks eines neuen Teilnehmers, der den Identitätsdatensatz (84) des neuen Teilnehmers enthält,
- Validieren des Blocks durch mindestens einen Teilnehmer der Blockchain, der sich von dem Teilnehmer unterscheidet, der das Mining durchgeführt hat, und Speichern des Blocks in der Blockchain nach der Validierung.

9. Verfahren nach einem der Ansprüche 1 bis 8,
**dadurch gekennzeichnet, dass** das Verfahren einen Schritt des Modifizierens der Schlüssel (STP3) umfasst, in welchem ein Teilnehmer mindestens einen ihm gehörenden Doppelschlüssel modifiziert, der einen geltenden öffentlichen Schlüssel und einen geltenden privaten Schlüssel enthält, wobei der Schritt des Modifizierens die folgenden Operationen umfasst:
- Generieren eines neuen Doppelschlüssels, der eine neuen öffentlichen Schlüssel und einen neuen privaten Schlüssel umfasst,
- Erzeugen und Aussenden in das Netzwerk einer als "Identifizierungstransaktion" bezeichneten Transaktion, die eine Kennung des besagten Teilnehmers und den geltenden öffentlichen Schlüssel sowie den neuen öffentlichen Schlüssel und einen diesem neuen öffentlichen Schlüssel zugeordneten kryptographischen Algorithmus umfasst, wobei die Identifizierungstransaktion den neuen öffentlichen Schlüssel und die Kennung, die mit dem geltenden privaten Schlüssel digital signiert sind, sowie die mit dem neuen privaten Schlüssel digital signierte Kennung umfasst,
- Einfügen der Identifikationstransaktion in einen neuen Block der Blockchain.

10. Verfahren nach Anspruch 9,
**dadurch gekennzeichnet, dass** die Operation des Einfügens der Identifikationstransaktion in einen neuen Block der Blockchain umfasst:
- eine Phase des Verifizierens der Identifikationstransaktion durch mindestens einen Teilnehmer des Netzwerkes, welche umfasst:
• Verifizieren, dass der geltende öffentliche Schlüssel zu dem die Kennung besitzenden Teilnehmer gehört, durch Abfragen der Blockchain mit einem Computer,
• erstes Entschlüsseln, mit einem Computer und dem geltenden öffentlichen Schlüssel, des neuen öffentlichen Schlüssels und der Kennung, die mit dem geltenden privaten Schlüssel digital signiert sind,
• Bestimmen einer ersten Äquivalenz zwischen dem neuen öffentlichen Schlüssel und der durch das erste Entschlüsseln erhaltenen Kennung und jeweils dem geltenden öffentlichen Schlüssel und der in der Identifikationstransaktion gespeicherten Kennung,
• zweites Entschlüsseln, mit einem Computer und dem neuen öffentlichen Schlüssel, der mit dem neuen privaten Schlüssel digital signierten Kennung,
• Bestimmen einer zweiten Äquivalenz zwischen der durch das zweite Entschlüsseln erhaltenen Kennung und der in der Identifikationstransaktion gespeicherten Kennung,
• Validieren der Identifikationstransaktion bei Vorliegen der ersten Äquivalenz und der zweiten Äquivalenz,
- eine Phase des Erzeugens eines neuen Blocks, der die Identifizierungstransaktion enthält.

11. Verfahren nach einem der Ansprüche 1 bis 10,
**dadurch gekennzeichnet, dass** das Verfahren einen Schritt des Widerrufens (STP4) umfasst, in welchem ein Teilnehmer mindestens einen ihm gehörenden Doppelschlüssel widerruft, der einen geltenden öffentlichen Schlüssel und einen geltenden privaten Schlüssel umfasst, wobei der Schritt des Widerrufens die folgenden Operationen umfasst:
- Erzeugen eines neuen Doppelschlüssels, der einen neuen öffentlichen Schlüssel und einen neuen privaten Schlüssel umfasst, um den widerrufenen Doppelschlüssel, der einen geltenden öffentlichen Schlüssel und einen geltenden privaten Schlüssel umfasst, zu ersetzen,
- Erzeugen und Aussenden einer Widerrufstransaktion in das Netzwerk, die eine Kennung des besagten Teilnehmers und den öffentlichen Widerrufsschlüssel dieses Teilnehmers und den geltenden zu widerrufenden öffentlichen Schlüssel sowie den neuen öffentlichen Schlüssel und einen diesem neuen öffentlichen Schlüssel zugeordneten kryptographischen Algorithmus umfasst, wobei die Widerrufstransaktion den neuen öffentlichen Schlüssel und die Kennung, die mit dem privaten Widerrufsschlüssel digital signiert sind, sowie die mit dem neuen privaten Schlüssel digital signierte Kennung umfasst,
- Einfügen der Widerrufstransaktion in einen neuen Block der Blockchain.

12. Verfahren nach Anspruch 11,
**dadurch gekennzeichnet, dass** die Operation des Einfügens der Widerrufstransaktion in einen neuen Block der Blockchain umfasst:
- eine Phase des Überprüfens der Widerrufstransaktion durch mindestens einen Teilnehmer des Netzwerks, die umfasst:
• Verifizieren, dass der öffentliche Widerrufsschlüssel zu dem Teilnehmer gehört, der diese Kennung hat, durch Abfragen der Blockchain mit einem Computer,
• erstes Entschlüsseln, mit einem Computer und dem öffentlichen Widerrufsschlüssel, des neuen öffentlichen Schlüssels und der Kennung, die mit dem privaten Widerrufsschlüssel digital signiert sind,
• Bestimmen einer ersten Äquivalenz zwischen dem neuen öffentlichen Schlüssel und der durch das erste Entschlüsseln erhaltenen Kennung und jeweils dem geltenden öffentlichen Schlüssel und der in der Widerrufstransaktion gespeicherten Kennung,
• zweites Entschlüsseln, mit einem Computer und dem neuen öffentlichen Schlüssel, der mit dem neuen privaten Schlüssel digital signierten Kennung,
• Bestimmen einer zweiten Äquivalenz zwischen der durch das zweite Entschlüsseln erhaltenen Kennung und der in der Widerrufstransaktion gespeicherten Kennung,
• Validieren des neuen Blocks bei Vorliegen der ersten Äquivalenz und der zweiten Äquivalenz,
- eine Phase des Erstellens eines neuen Blocks, der die Widerrufstransaktion enthält.

13. Verfahren nach einem der Ansprüche 1 bis 12,
**dadurch gekennzeichnet, dass** das Verfahren einen Schritt des Schlüsselhinterlegens (STP6) umfasst, der für einen Teilnehmer die folgenden Operationen umfasst:
- Erstellen einer Kopie des Chiffrier-Doppelschlüssels dieses Teilnehmers,
- Chiffrieren der Kopie mit einem öffentlichen Schlüssel eines Chiffrier-Doppelschlüssels eines Sicherheitsbeauftragten des Teilnehmers, dann Chiffrieren, mit einem öffentlichen Chiffrierschlüssel eines von diesem Teilnehmer verschiedenen Hauptteilnehmers.

14. Verfahren nach einem der Ansprüche 1 bis 13,
**dadurch gekennzeichnet, dass** zum Aufzeichnen einer als "signierte Datentransaktion" bezeichneten Transaktion in der Blockchain, wobei die signierte Datentransaktion digital signierte auszutauschende Daten umfasst,
wobei die auszutauschenden Daten Originaldaten oder einen durch ein Hash-Verfahren erhaltenen, als "erster Sende-Fingerabdruck" bezeichneten digitalen Fingerabdruck der Originaldaten umfassen, wobei das Verfahren die folgenden Operationen umfasst:
- Verschlüsseln der auszutauschenden, digital zu signierenden Daten durch Signieren mit dem privaten Signaturschlüssel eines als "Absender" bezeichneten Teilnehmers, um die auszutauschenden, digital signierten Daten zu erhalten,
- Senden der signierten Datentransaktion, die die digital signierten auszutauschenden Daten enthält, an das Netzwerk,
- Erstellen eines als "neuer Block" bezeichneten Blocks durch einen als "Nebenteilnehmer" bezeichneten Teilnehmer, wobei dieser neue Block mindestens einen digitalen Fingerabdruck des letzten Blocks der Blockkette und die signierte Datentransaktion umfasst,
- Validieren des neuen Blocks durch mindestens einen der Teilnehmer,
- Einfügen des neuen Blocks in die Blockchain nach dem Validieren.

15. Verfahren nach Anspruch 14,
**dadurch gekennzeichnet, dass** die auszutauschenden Daten in Form eines ersten Sende-Fingerabdrucks vorliegen und dass, wenn der Nebenteilnehmer die ursprünglichen Daten empfangen hat, das Verfahren eine Operation des Verifizierens umfasst, die durchgeführt wird, bevor ein neuer Block konstruiert wird, die die folgenden Operationen umfasst:
- Abfragen der Blockchain, um den geltenden öffentlichen Signaturschlüssel des Absenders zu erhalten,
- Entschlüsseln der digital signierten auszutauschenden Daten mit dem geltenden öffentlichen Signaturschlüssel des Absenders, um den ersten Sende-Fingerabdruck zu erhalten,
- Anfertigen eines als "Kontrollfingerabdruck" bezeichneten digitalen Fingerabdrucks der Originaldaten,
- Vergleichen des Kontrollfingerabdrucks und des ersten Sende-Fingerabdrucks.

16. Verfahren nach Anspruch 15,
**dadurch gekennzeichnet, dass** die auszutauschenden Daten in Form eines ersten Sende-Fingerabdrucks vorliegen und ein Empfänger die folgenden Operationen durchführt:
- Verifizieren der signierten Datentransaktion:
• durch Abfragen der Blockchain, um den geltenden öffentlichen Signaturschlüssel des Absenders zu erhalten,
• durch Entschlüsseln der digital signierten auszutauschenden Daten mit dem geltenden öffentlichen Signaturschlüssel des Absenders, um den ersten Sende-Fingerabdruck zu erhalten,
• durch Erstellen eines als "Kontroll-Fingerabdruck" bezeichneten digitalen Fingerabdrucks der Originaldaten,
• durch Vergleichen des Kontroll-Fingerabdrucks und des ersten Sende-Fingerabdrucks,
- Verifizieren, dass der Block der Blockchain, der die signierte Datentransaktion enthält, validiert wurde,
- Nichtbeachten der signierten Datentransaktion, wenn der Kontroll-Fingerabdruck und der erste Sende-Fingerabdruck unterschiedlich sind oder wenn der Block der Blockchain, der die signierte Datentransaktion enthält, nicht validiert wurde.

17. Verfahren nach einem der Ansprüche 1 bis 16,
**dadurch gekennzeichnet, dass**, um in der Blockchain eine als "chiffrierte Datentransaktion" bezeichnete Transaktion aufzuzeichnen, wobei die chiffrierte Datentransaktion digital chiffrierte auszutauschende Daten umfasst, wobei die auszutauschenden Daten Originaldaten oder einen digitalen Fingerabdruck der Originaldaten umfassen, der als "zweiter Übertragungsfingerabdruck" bezeichnet wird und durch ein Hash-Verfahren erhalten wird, wobei die chiffrierte Datentransaktion für einen als "Empfänger" bezeichneten Teilnehmer bestimmt ist, das Verfahren die folgenden Operationen umfasst:
- Abfragen der Blockkchain, um den geltenden dem Empfänger zugewiesenen öffentlichen Chiffrierschlüssel zu erhalten,
- Erzeugen eines symmetrischen Schlüssels und Chiffrieren von auszutauschenden Daten mit dem symmetrischen Schlüssel, um mit dem symmetrischen Schlüssel digital chiffrierte auszutauschende Daten zu erhalten,
- Chiffrieren des symmetrischen Schlüssels unter Verwendung des öffentlichen Chiffrierschlüssels des Empfängers, um einen mit dem öffentlichen Schlüssel digital chiffrierten symmetrischen Schlüssel zu erhalten,
- Aussenden der chiffrierten Datentransaktion an das Netzwerk, wobei die chiffrierte Datentransaktion die mit dem symmetrischen Schlüssel digital chiffrierten auszutauschenden Daten und den mit dem öffentlichen Schlüssel des Empfängers digital chiffrierten symmetrischen Schlüssel enthält,
- Erzeugen eines als "neuer Block" bezeichneten Blocks durch einen als "Nebenteilnehmer" bezeichneten Teilnehmer, wobei dieser neue Block mindestens umfasst: einen Fingerabdruck des letzten Blocks der Blockchain, die chiffrierte Datentransaktion,
- Validieren des neuen Blocks durch mindestens einen Teilnehmer,
- Einfügen des neuen Blocks in die Blockchain.

18. Verfahren nach Anspruch 17, **dadurch gekennzeichnet, dass** die auszutauschenden Daten in Form des zweiten Sende-Fingerabdrucks vorliegen, und wenn ein Empfänger die ursprünglichen Daten erhalten hat, das Verfahren die folgenden Operationen umfasst:
- Verifizieren der chiffrierten Datentransaktion durch:
• Dechiffrieren, unter Verwendung des geltenden privaten Chiffrierschlüssels des Empfängers, des mit dem öffentlichen Chiffrierschlüssel des Empfängers verschlüsselten symmetrischen Schlüssels,
• Dechiffrieren, unter Verwendung des symmetrischen Schlüssels, der mit dem symmetrischen Schlüssel chiffrierten auszutauschenden Daten, um den zweiten Sende-Fingerabdruck zu erhalten,
• Erstellen eines als "Verifizierungsfingerabdruck" bezeichneten digitalen Fingerabdrucks der Originaldaten,
• Vergleichen des Verifizierungsfingerabdrucks mit dem zweiten Sende-Fingerabdruck,
- Nichtberücksichtigen der chiffrierten Datentransaktion, wenn der Verifizierungsfingerabdruck und der zweite Sende-Fingerabdruck unterschiedlich sind.

19. Verfahren nach einem der Ansprüche 14 bis 18,
**dadurch gekennzeichnet, dass** mindestens eine Datentransaktion die Identität des Absenders oder eine Registrierungsnummer oder ein Datum enthält.

20. Datenaustauschsystem (1),
**dadurch gekennzeichnet, dass** das Datenaustauschsystem (1) für jeden Teilnehmer (5) des Netzwerks (2) mindestens einen Computer (10) zur Durchführung des Verfahrens nach einem der Ansprüche 1 bis 19 umfasst, wobei mindestens ein Computer mindestens eines Teilnehmers (5) die Blockchain speichert..

## Claims

1. Method for sharing data between participants (5) of a network, the method comprising a data cryptography step using an asymmetrical double key cryptography scheme, each participant (5) having at least one double key,
wherein, a block chain (20) being used, a block (25) comprising a digital imprint (30) of the preceding block in the block chain (20) and at least one transaction (35) which comprises data to be shared, at least one block being an initialization block (26) which initializes the block chain and at least one block being a block for registering a new participant, at least one participant (5) being a major participant, at least one participant (5) being a subordinate participant and at least one participant (5) being a data-processing equipment item, a major participant being authorized to request participation in the network of a new major participant and a subordinate participant and a new data-processing equipment item, a subordinate participant being authorized only to request participation in the network for a new data-processing equipment item, the method comprises:
- an initialization step (STP1) of the block chain which comprises an operation for storing the at least one initialization block (26) in the block chain by a predetermined authority using at least one computer, the at least one initialization block (26) comprising at least one transaction (36) which includes an identity registration (84) of a major participant,
- a step of accepting a new participant (STP2) in the block chain which includes an operation for storing at least one block for registering a new participant (29) in the block chain by a major or subordinate participant using at least one computer, the at least one block for registering a new participant (29) comprising at least one transaction (34) which includes an identity registration (84) of a new participant,
an identity registration (84) of a major/subordinate participant or data-processing equipment item comprising identification data of this major participant/subordinate participant or data-processing equipment item which includes at least one identifier of this major participant/subordinate participant or data-processing equipment item, a public key of a double key referred to as a double signature key of this major participant/subordinate participant or data-processing equipment item intended for data signature,
a public key of a double key referred to as a double encryption key of this major participant/subordinate participant or data-processing equipment item intended for the encryption of data, a public key of a double key referred to as a double revocation key of this major participant/subordinate participant or data-processing equipment item which is intended for the revocation of at least the double encryption key and the double signature key of this major participant/subordinate participant or data-processing equipment item,
the authority no longer intervening following the initialization step or intervening only during a step of re-initialization of a participant following a revocation of the double revocation key of this participant.

2. Method according to claim 1,
**characterized in that** an identity registration (84) of a major participant/subordinate participant or data-processing equipment item involves an identification of a cryptographic signature algorithm associated with the double signature key of this major participant/subordinate participant or data-processing equipment item, an identification of a cryptographic encryption algorithm which is associated with the double encryption key of this major participant/subordinate participant or data-processing equipment item, an identification of a cryptographic revocation algorithm associated with the double revocation key of this major participant/subordinate participant or data-processing equipment item.

3. Method according to either claim 1 or 2,
**characterized in that** an identity registration (84) of a major participant/subordinate participant or data-processing equipment item comprises a validity date of the double signature key of this major participant/subordinate participant or data-processing equipment item and a validity date of the double encryption key of this major participant/subordinate participant or data-processing equipment item.

4. Method according to any one of claims 1 to 3,
**characterized in that** an identity registration (84) of a major participant/subordinate participant or data-processing equipment item comprises an importance level of this major participant/subordinate participant or data-processing equipment item used during a validation operation of a block by proof of stake created by this major participant/subordinate participant or data-processing equipment item.

5. Method according to any one of claims 1 to 4,
**characterized in that** the at least one identifier of a major participant/subordinate participant or data-processing equipment item includes a name of this major participant/subordinate participant or data-processing equipment item or an address of this major participant/subordinate participant or data-processing equipment item.

6. Method according to any one of claims 1 to 5,
**characterized in that** the identification data of a participant include a level of assurance of this participant which enables the manner in which this participant has been identified to be indicated.

7. Method according to any one of claims 1 to 6,
**characterized in that** an identity registration (84) of a major participant/subordinate participant or data-processing equipment item comprises a public key of a double key referred to as a "double authentication key" of this major participant/subordinate participant or data-processing equipment item intended for the authentication of this major participant/subordinate participant or data-processing equipment item.

8. Method according to any one of claims 1 to 7,
**characterized in that** the operation for storing at least one block for registering a new participant (29) comprises the following operations:
- transmitting to the network a request including an identity registration (84) of the new participant,
- mining by a participant of the block chain of an identification block of a new participant including the identity registration (84) of the new participant,
- validating the block by at least one participant of the block chain different from the participant which carried out the mining and storage after the validation of the block in the block chain.

9. Method according to any one of claims 1 to 8, **characterized in that** the method comprises a key modification step (STP3) during which a participant modifies at least one double key belonging to him/her including an operative public key and an operative private key, the modification step comprising the following operations:
- generating a new double key including a new public key and a new private key,
- creating and transmitting to the network a transaction referred to as an "identification transaction" comprising an identifier of the participant and the operative public key and the new public key and a cryptographic algorithm associated with this new public key, the identification transaction comprising the new public key and the identifier which are digitally signed with the operative private key and the identifier which is digitally signed with the new private key,
- inserting the identification transaction in a new block of the block chain.

10. Method according to claim 9,
**characterized in that** the operation for inserting the identification transaction in a new block of the block chain comprises:
- a phase for verification of the identification transaction using at least one participant of the network which includes:
∘ verifying that the operative public key belongs to the participant having the identifier by consulting the block chain with a computer,
∘ a first decryption with a computer and the operative public key of the new public key and the identifier which are digitally signed by the operative private key,
∘ determining a first equivalence between the new public key and the identifier obtained by the first decryption and the operative public key and the identifier stored in the identification transaction, respectively,
∘ a second decryption with a computer and the new public key of the identifier digitally signed by the new private key,
∘ determining a second equivalence between the identifier obtained by the second decryption and the identifier stored in the identification transaction,
∘ validating the identification transaction in the presence of the first equivalence and the second equivalence,
∘ a phase for creating a new block including the identification transaction.

11. Method according to any one of claims 1 to 10,
**characterized in that** the method comprises a revocation step (STP4) during which a participant revokes at least one double key belonging to him/her including an operative public key and an operative private key, the revocation step comprising the following operations:
- generating a new double key including a new public key and a new private key which must replace the revoked double key including an operative public key and an operative private key,
- creating and transmitting to the network a revocation transaction comprising an identifier of the participant and the public revocation key of this participant and the operative public key to be revoked and the new public key and a cryptographic algorithm which is associated with this new public key, the revocation transaction comprising the new public key and the identifier which are digitally signed with the private revocation key and the identifier which is digitally signed with the new private key,
- inserting the revocation transaction in a new block of the block chain.

12. Method according to claim 11,
**characterized in that** the operation for inserting the revocation transaction in a new block of the block chain comprises:
- a phase for verifying the revocation transaction using at least one participant of the network which includes:
∘ verifying that the public revocation key belongs to the participant having the identifier by consulting the block chain with a computer,
∘ a first decryption with a computer and the public revocation key of the new public key and the identifier which are digitally signed by the private revocation key,
∘ determining a first equivalence between the new public key and the identifier obtained by the first decryption and the operative public key and the identifier stored in the revocation transaction, respectively,
∘ a second decryption with a computer and the new public key of the identifier which is digitally signed by the new private key,
∘ determining a second equivalence between the identifier obtained by the second decryption and the identifier stored in the revocation transaction,
∘ validating the new block in the presence of the first equivalence and the second equivalence,
- a phase for creating a new block including the revocation transaction.

13. Method according to anyone of claims 1 to 12,
**characterized in that** the method comprises a key escrow step (STP6) which comprises the following operations for a participant:
- creating a copy of the double encryption key of this participant,
- encryption of the copy with a public key of a double encryption key of a security officer of the participant, then encryption with a public encryption key of a major participant different from the participant.

14. Method according to anyone of claims 1 to 13,
**characterized in that**, in order to register in the block chain a transaction referred to as a "signed data transaction", the signed data transaction comprising data which are intended to be exchanged and which are digitally signed, the data to be exchanged including original data or a digital imprint of the original data referred to as a "first transmission imprint" obtained using a hashing process, the method comprises the following operations:
- encryption of the data which are intended to be exchanged and which are intended to be digitally signed by signing them with the private signature key of a participant referred to as a "sender" in order to obtain the data which are intended to be exchanged and which are digitally signed,
- sending to the network the signed data transaction including the data which are intended to be exchanged and which are digitally signed,
- creating a block referred to as a "new block" by a participant referred to as a "miner", the new block comprising at least one digital imprint of the last block of the block chain and the signed data transaction,
- validating the new block by at least one participant,
- inserting the new block into the block chain after the validation.

15. Method according to claim 14,
**characterized in that**, the data to be exchanged being in the form of a first transmission imprint, the miner having received the original data, the method comprises a verification operation which is carried out before constructing the new block comprising the operations of:
- consulting the block chain in order to obtain the operative public signature key of the sender,
- decrypting, with the operative public signature key of the sender, data which are intended to be exchanged and which are digitally signed in order to obtain the first transmission imprint,
- producing a digital imprint referred to as a "control imprint" of the original data,
- comparing the control imprint and the first transmission imprint.

16. Method according to claim 15,
**characterized in that**, the data to be exchanged being in the form of a first transmission imprint, a recipient carries out the following operations:
- verifying the signed data transaction:
∘ by consulting the block chain in order to obtain the operative public signature key of the sender,
∘ by decrypting, with the operative public signature key of the sender, the data which are intended to be exchanged and which are digitally signed in order to obtain the first transmission imprint,
∘ by carrying out a digital imprint referred to as a "control imprint" of the original data,
∘ by comparing the control imprint and the first transmission imprint,
- verifying that the block of the block chain containing the signed data transaction has been validated,
- not taking into account the signed data transaction if the control imprint and the first transmission imprint are different or if the block of the block chain containing the signed data transaction has not been validated.

17. Method according to anyone of claims 1 to 16,
**characterized in that**, in order to register in the block chain a transaction referred to as an "encrypted data transaction", the encrypted data transaction comprising data which are intended to be exchanged and which are digitally encrypted, the data to be exchanged including original data or a digital imprint of the original data referred to as a "second transmission imprint" obtained using a hashing process, the encrypted data transaction being intended for a participant referred to as the "recipient", the method comprises the following operations:
- consulting the block chain in order to obtain the operative public encryption key allocated to the recipient,
- creating a symmetrical key and encrypting the data to be exchanged with this symmetrical key in order to obtain digitally encrypted data to be exchanged with the symmetrical key,
- encrypting the symmetrical key using the public encryption key of the recipient in order to obtain a digitally encrypted symmetrical key with the public key,
- sending to the network the encrypted data transaction, the encrypted data transaction including the digitally encrypted data to be exchanged with the symmetrical key and the digitally encrypted symmetrical key with the public key of the recipient,
- creating a block referred to as a "new block" by a participant referred to as a "miner", the new block comprising at least one imprint of the last block of the block chain, the encrypted data transaction,
- validating the new block by at least one participant,
- inserting the new block in the block chain.

18. Method according to claim 17,
**characterized in that**, the data to be exchanged being in the form of the second transmission imprint, a recipient having received the original data, the method comprises the following operations:
- verifying the encrypted data transaction by:
∘ decryption using the operative private encryption key of the recipient of the encrypted symmetrical key with the public encryption key of the recipient,
∘ decryption using the symmetrical key of the encrypted data to be exchanged with the symmetrical key in order to obtain the second transmission imprint,
∘ production of a digital imprint referred to as a "verification imprint" of the original data,
∘ comparison of the verification imprint and the second transmission imprint,
- not taking into account the encrypted data transaction if the verification imprint and the second transmission imprint are different.

19. Method according to any one of claims 14 to 18,
**characterized in that** at least one data transaction comprises the identity of the sender or a registration number or a date.

20. Data exchange system (1),
**characterized in that** the data exchange system (1) comprises for each participant (5) of the network (2) at least one computer (1) for carrying out the method according to any one of claims 1 to 19, at least one computer of at least one participant (5) storing the block chain.
